# EUROPÄISCHE PATENTSCHRIFT

(11) **EP 4 264 720 B1**
(45) Veröffentlichungstag und Bekanntmachung des Hinweises auf die Patenterteilung: **11.11.2026**
(21) Anmeldenummer: 21840823.5
(22) Anmeldetag: 16.12.2021
(51) Int. Cl.: H01M 10/04, H01M 10/0585, H01M 50/103, H01M 50/533, H01M 50/54

(54) **BATTERIEZELLE, BATTERIEMODUL UND ELEKTRISCH ANGETRIEBENES KRAFTFAHRZEUG**
BATTERY CELL, BATTERY MODULE AND ELECTRICALLY POWERED MOTOR VEHICLE
CELLULE DE BATTERIE, MODULE DE BATTERIE ET VÉHICULE AUTOMOBILE À ENTRAÎNEMENT ÉLECTRIQUE

(30) Priorität: 21.12.2020 DE 102020216420
(43) Veröffentlichungstag der Anmeldung: 25.10.2023
(73) Patentinhaber: PowerCo SE, 38239 Salzgitter (DE)
(72) Erfinder: BATRES, Talia, 38112 Braunschweig (DE); BÖHM, Dennis, 38302 Wolfenbüttel (DE); BREUER, Alexander, 29227 Celle (DE)
(74) Vertreter: FDST Patentanwälte
(86) Internationale Anmeldenummer: PCT/EP2021/086216
(87) Internationale Veröffentlichungsnummer: WO 2022/136117

(56) Entgegenhaltungen:
- EP-A1- 3 376 552
- DE-A1- 102011 109 203
- US-A1- 2004 038 124

## Beschreibung

Die Erfindung betrifft eine Batteriezelle, insbesondere eine Lithium-Ionen-Batteriezelle, mit einer in einer Hülle aufgenommenen Elektrodenanordnung. Des Weiteren betrifft die Erfindung ein Batteriemodul mit einer Anzahl an solchen Batteriezellen sowie ein elektrisch angetriebenes Kraftfahrzeug, dessen Traktionsbatterie zumindest ein solches Batteriemodul oder zumindest eine solche Batteriezelle umfasst.

Ein elektrisch angetriebenes Kraftfahrzeug weist typischerweise eine Traktionsbatterie (Hochvoltbatterie, HV-Batterie) auf, welche einen Elektromotor zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Traktionsbatterie speichert (BEV, battery electric vehicle), ein Elektrofahrzeug mit einem Reichweitenverlängerer (REEV, range extended electric vehicle), ein Hybridfahrzeug (HEV, hybrid electric vehicle), ein Plug-In-Hybridfahrzeug (PHEV, plug-in hybrid electric vehicle) und/oder ein Brennstoffzellenfahrzeug (FCEV, fuel cell electric vehicle) zu verstehen, welches die mittels einer Brennstoffzelle erzeugte elektrische Energie in der Traktionsbatterie zwischenspeichert.

Eine solche Traktionsbatterie umfasst eine Anzahl an Batteriezellen, welche beispielsweise in auch als Zellmodulen bezeichneten Batteriemodulen zusammengefasst sind. Die Batteriezellen und gegebenenfalls die Batteriemodule sind dabei miteinander in Serie und/oder parallel zueinander geschaltet, so dass die Traktionsbatterie eine ausreichend hohe Stromstärke und eine ausreichend hohe Spannung für einen zum Antreiben des Kraftfahrzeugs vorgesehenen Elektromotor bereitstellen kann.

Zweckmäßig sind die Traktionsbatterie bzw. dessen Batteriezellen als eine sogenannte Sekundärbatterie bzw. als sogenannte Sekundärzellen ausgebildet. Mit anderen Worten sind die Batterie und dessen Batteriezellen wieder aufladbar. Für einen möglichst großen Komfort eines Nutzers ist es dabei wünschenswert, dass ein entsprechender Ladevorgang möglichst schnell erfolgen kann. Eine maximal realisierbare Ladegeschwindigkeit (Laderate) des Ladevorgangs ist hierbei insbesondere aufgrund einer Wärmeentwicklung und/oder aufgrund des ohmschen Widerstandes der Batteriezellen zu begrenzen, um eine Beschädigung der Traktionsbatterie und deren Batteriezellen zu vermeiden.

Aus der WO 2020/096973 60 ist eine als Rundzelle ausgebildete Batteriezelle bekannt. Diese weist ein zylindrisches Gehäuse auf, in welchem ein Elektrodenwickel aufgenommen ist. Die Anode des Elektrodenwickels weist axial endseitig einen oder mehrere nicht beschichtete Abschnitte auf, der bzw. die mit dem Boden des Gehäuses elektrisch verbunden ist bzw. sind.

In der DE 10 2011 109 203 A1 ist eine Einzelzelle für eine Batterie offenbart. Diese umfasst einen in einem aus zwei Hüllblechen gebildeten Gehäuse angeordneten Elektrodenfolienstapel und einen Rahmen, mittels welchen die zwei Hüllbleche elektrisch voneinander isoliert sind. Die Stromableiterfahnen von Elektrodenfolien einer Polarität sind jeweils zur Bildung eines Polkontaktes miteinander verbunden und mit einem der Hüllbleche verbunden.

In der US 2004/038124 A1 ist eine Batteriezelle mit einem Elektrodenstapel beschrieben. Diese umfasst einen positiven Tab, der mit den positiven Elektroden verbunden ist; und einen negativen Tab, der mit den negativen Elektroden verbunden ist. Dabei sind der positive Tab und der negative Tab von den Endkanten der langen Seiten eines aus einer Metallverbundfolie gebildeten Zellengehäuses nach außen gezogen.

Der Erfindung liegt die Aufgabe zugrunde, eine besonders geeignete Batteriezelle anzugeben. Insbesondere soll anhand dieser ein möglichst schneller Ladevorgang ermöglicht sein. Des Weiteren soll ein Batteriemodul mit einer Anzahl solcher Batteriezellen sowie ein elektrisch angetriebenes Kraftfahrzeug angegeben werden, dessen Traktionsbatterie zumindest ein solches Batteriemodul umfasst.

Bezüglich der Batteriezelle wird die Aufgabe erfindungsgemäß gelöst durch die Merkmale des Anspruchs 1. Hinsichtlich des Batteriemoduls wird die Aufgabe mit den Merkmalen des Anspruchs 17 und bezüglich des elektrisch angetriebenen Kraftfahrzeugs mit den Merkmalen des Anspruchs 19 erfindungsgemäß gelöst. Vorteilhafte Ausgestaltungen und Weiterbildungen sind Gegenstand der Unteransprüche. Dabei gelten die Ausführungen im Zusammenhang mit der Batteriezelle sinngemäß auch für das Batteriemodul sowie für das elektrisch angetriebene Kraftfahrzeug und umgekehrt.

Die Batteriezelle ist besonders bevorzugt als eine Lithium-Ionen-Batteriezelle ausgebildet. Sie umfasst eine Elektrodenanordnung, welche wiederum mindestens eine Anode und mindestens eine Kathode aufweist.

Die Elektrodenanordnung ist beispielsweise als ein Flachwickel ausgebildet. Der Flachwickel weist dabei zweckmäßig eine (einzige) Anode und eine (einzige) Kathode auf, wobei zwischen der Anode und der Kathode ein Separator angeordnet ist. Beispielsweise ist ein weiterer Separator vorgesehen, welcher an der der Kathode abgewandten Seite der Anode oder an der der Anode abgewandten Seite der Kathode angeordnet ist. Bei der Herstellung des Wickels werden die übereinander angeordnete Anode, Kathode und der bzw. die Separatoren um einen flachen Wickeldorn gewickelt. Die Anode, die Kathode und der Separator sind dabei beispielsweise jeweils als ein Tochtercoil ausgebildet.

Bevorzugt ist die Elektrodenanordnung jedoch als ein Elektrodenstapel ausgebildet, der mehrere Anoden und mehrere Kathoden aufweist. Dabei sind die Anoden und die Kathoden in einer Stapelrichtung alternierend übereinander gestapelt, wobei zwischen den Anoden und den Kathoden jeweils ein Separator angeordnet ist. Beispielsweise ist hierbei jede der Anoden oder jede der Kathoden mit dem Separator laminiert. Beispielsweise ist der Elektrodenstapel aus einer Anzahl an Monozellen gebildet, welche jeweils aus einer (einzigen) Anode, aus einer (einzigen) Kathode und einem Separator gebildet sind, wobei die Anode, die Kathode und der Separator miteinander gefügt sind. Alternativ ist der Elektrodenstapel beispielsweise aus einer Anzahl an Bizellen gebildet, die jeweils zwei Anoden und zwei Kathoden aufweisen, wobei die Anoden und die Kathoden alternierend übereinander gestapelt sind, wobei zwischen den Anoden und den Kathoden jeweils ein Separator angeordnet ist, und wobei der Separator und die Anoden und die Kathoden miteinander gefügt sind.

Geeigneter Weise sind jede der Anoden und jede der Kathoden blattförmig, und somit flach ausgebildet. Jede der Anoden und jede der Kathoden ist jeweils anhand eines Substrats gebildet, welches vorzugsweise als eine Metallfolie ausgebildet ist. Geeigneter Weise ist das Substrat der jeweiligen Anode anhand einer Kupferfolie und das Substrat der jeweiligen Kathode anhand einer Aluminiumfolie gebildet.

Zweckmäßigerweise weist jede der Anoden und jede der Kathoden eine rechteckige Grundfläche auf. Somit weist jede der Anoden und jede der Kathoden zwei zueinander parallel verlaufende Längs-Kanten und zwei zu diesen quer verlaufende Breiten-Kanten auf. Die Längs-Kanten erstrecken sich entlang einer als Längsrichtung bezeichneten Richtung und die Breitenkanten entlang einer als Breitenrichtung bezeichneten Richtung. Dabei bilden die Längsrichtung und die Breitenrichtung die Haupterstreckungsrichtungen der jeweiligen Anode oder der jeweiligen Kathode.

Die als Elektrodenstapel oder auch die als Flachwickel ausgebildete Elektrodenanordnung weist eine rechteckige Grundform auf. Eine solche Elektrodenanordnung ist somit besonders geeignet für einen prismatischen Zellaufbau, also für eine quaderförmige Batteriezelle. Mit anderen Worten weist die Batteriezelle die Form eines geraden Prismas mit rechteckiger Grundfläche auf.

Jede der Anoden und jede der Kathoden ist in einem ersten Abschnitt beschichtet. Die Beschichtung umfasst dabei ein Aktivmaterial. Zweckmäßig umfasst die Beschichtung weiterhin einen Binder sowie ein Leitmittel, wie beispielsweise Graphit oder Leitruß. Vorzugsweise ist das Substrat in diesem ersten Abschnitt beidseitig beschichtet. Beispielsweise wird als Aktivmaterial für die oder für jede Anode Graphit, Graphen, sogenannte Hard- oder Soft- Carbon-Nanotubes. Alternativ ist das Substrat mit Silizium oder mit Lithium als Aktivmaterial versehen. Beispielsweise wird als Aktivmaterial für die oder für jede Kathode ein Lithium-Nickel-Cobalt-AluminiumOxid (NCA), ein Lithium-Eisen-Phosphat (LFP), ein Lithium-Nickel-Mangan-Cobalt-Oxid (NMC), Lithium-Titanat (LTO), Lithiummanganoxid (LMO), Lithium-Mangan-Nickeloxid (LMNO), Lithium-Cobalt-Oxid (LCO), LiFeSO₄F, LiTiS₂ oder ein anderes aus dem Stand der Technik als Aktivmaterial für eine Kathode bekanntes Material verwendet.

Jede der Anoden weist einen Anoden-Kontaktabschnitt auf, welcher sich vollständig entlang einer deren beiden Längs-Kanten erstreckt. Mit anderen Worten weist jede der Anoden endseitig bezüglich der Breitenrichtung den Anoden-Kontaktabschnitt auf, wobei sich der Anoden-Kontaktabschnitt sich entlang der gesamten Längs-Kante erstreckt. Somit weist jede der Anoden zwei Abschnitte, nämlich den (beschichteten) ersten Abschnitt und den Anoden-Kontaktabschnitt auf, welche in Breitenrichtung hintereinander angeordnet sind. Die beiden Abschnitte sind dabei in Längsrichtung durchgehend. Mit anderen Worten entspricht die Ausdehnung der beiden Abschnitte in Längsrichtung, und somit die Ausdehnung der Längs-Kanten, der Ausdehnung der jeweiligen Anode.

In analoger Weise hierzu weist jede der Kathoden einen Kathoden-Kontaktabschnitt auf, welcher sich vollständig entlang einer deren beiden Längs-Kanten erstreckt. Mit anderen Worten weist jede der Kathoden endseitig bezüglich der Breitenrichtung den Kathoden-Kontaktabschnitt auf, wobei sich der Kathoden-Kontaktabschnitt entlang der gesamten Längs-Kante erstreckt.

Somit weist jede der Kathoden zwei Abschnitte, nämlich den (beschichteten) ersten Abschnitt und den Kathoden-Kontaktabschnitt auf, welche in Breitenrichtung hintereinander angeordnet sind. Die beiden Abschnitte sind dabei in Längsrichtung durchgehend. Mit anderen Worten entspricht die Ausdehnung der beiden Abschnitte in Längsrichtung, und somit die Ausdehnung der Längs-Kanten, der Ausdehnung der jeweiligen Kathode.

Der Anoden-Kontaktabschnitt der jeweiligen Anode bzw. der Kathoden-Kontaktabschnitt der jeweiligen Kathode ist dabei bevorzugt anhand eines nicht beschichteten Abschnitts des Substrats gebildet. Bevorzugt ist also das jeweilige Substrat unter Bildung des ersten Abschnitts beschichtet, wobei der zweite Abschnitt, also der Anoden-Kontaktabschnitt oder der Kathoden-Kontaktabschnitt anhand eines unbeschichteten Abschnitts des Substrats gebildet ist, der sich endseitig in Breitenrichtung entlang der gesamten Längs-Kante erstreckt.

Zusammenfassend weist also jede der Anoden einen sich vollständig entlang einer deren Längs-Kanten erstreckenden Anoden-Kontaktabschnitt und jede der Kathoden einen sich vollständig entlang einer deren Längs-Kanten erstreckenden Kathoden-Kontaktabschnitt auf.

Die Batteriezelle weist des Weiteren eine Hülle aus einem ersten Hüllenteil und aus einem zweiten Hüllenteil auf, welches elektrisch isoliert zum ersten Hüllenteil ist. Mit anderen Worten sind das erste Hüllenteil und das zweite Hüllenteil nicht elektrisch leitend miteinander verbunden. Die Elektrodenanordnung ist dabei in der Hülle aufgenommen. Mit anderen Worten ist die Elektrodenanordnung von der Hülle umschlossen.

Weiterhin ist jede der Anoden mittels deren Anoden-Kontaktabschnitt mit dem ersten Hüllenteil und jede der Kathoden mittels deren Kathoden-Kontaktabschnitt mit dem zweiten Hüllenteil elektrisch verbunden, also elektrisch kontaktiert. Somit erfolgt eine Funktionsintegration der Batteriezellenpole in die Hülle. Insbesondere erfolgt die Kontaktierung der Anoden-Kontaktabschnitte oder des Anoden- Kontaktabschnitts mit dem ersten Hüllenteil im Inneren, also in einem von der Hülle Umschlossenen Bereich, der Batteriezelle. Mit anderen Worten ist die elektrische Verbindung an einer Innenseite der ersten Hülle mit dem Anoden-Kontaktabschnitt oder mit den Anoden-Kontaktabschnitten hergestellt. Insbesondere erfolgt die Kontaktierung der Kathoden-Kontaktabschnitte oder des Kathoden-Kontaktabschnitts mit dem zweiten Hüllenteil im Inneren, also in einem von der Hülle umschlossenen Bereich, der Batteriezelle. Mit anderen Worten ist die elektrische Verbindung an einer Innenseite der zweiten Hülle mit dem Kathoden-Kontaktabschnitt oder mit den Kathoden-Kontaktabschnitten hergestellt. Die Kontaktabschnitte werden also nicht nach Batteriezellenaußen geführt.

Sofern mehrere Kathoden vorhanden sind, werden die Kathoden-Kontaktabschnitte beispielsweise miteinander gefügt. Sofern mehrere Anoden vorhanden sind, werden die Anoden-Kontaktabschnitte beispielsweise ebenso miteinander gefügt.

Zweckmäßigerweise ist das erste Hüllenteil zumindest in einem Kontaktbereich für die elektrische Verbindung mit dem Anoden-Kontaktabschnitt bzw. mit den Anoden-Kontaktabschnitten elektrisch leitend. Zweckmäßigerweise ist das zweite Hüllenteil zumindest im einem Kontaktbereich für die elektrische Verbindung mit dem Kathoden-Kontaktabschnitt bzw. mit den Kathoden-Kontaktabschnitten elektrisch leitend. Geeigneter Weise jedoch ist das erste Hüllenteil und/oder das zweite Hüllenteil jeweils aus einem elektrisch leitenden Material gebildet.

Die Batteriezelle ist vorzugsweise für eine Traktionsbatterie eines elektrisch angetriebenen Kraftfahrzeugs vorgesehen und eingerichtet. Vorzugsweise ist die Batteriezelle weiterhin für ein Batteriemodul einer Traktionsbatterie vorgesehen und eingerichtet. Grundsätzlich ist es möglich, dass die Batteriezelle eine Primär-Batteriezelle (Primärzelle) ist, jedoch ist die Batteriezelle zweckmäßigerweise eine Sekundärbatteriezelle (Sekundärzelle).

Da sich der Anoden- und der Kathoden-Kontaktabschnitt entlang der gesamten Längs-Kante erstreckt ist ein Stromfluss vom beschichteten Abschnitt der jeweiligen Elektrode über den Kontaktbereich zum Hüllenteil vergleichsweise homogen, so dass eine Zellalterung verlangsamt ist.

Im Vergleich zu herkömmlichen Batteriezellen, bei denen ein Ableiterfähnchen an einem kleinen Abschnitt einer der Kanten der jeweiligen Elektrode vorgesehen ist, ist aufgrund der Erstreckung des Kontaktabschnitts entlang der gesamten Längs-Kante eine Gesamtstrecke, entlang welcher der Strom vom beschichteten Abschnitt zum jeweiligen Kontaktabschnitt fließt, reduziert. Also ist eine Gesamtstrecke der im leitenden Material (durch Potential-Unterschiede) entstehenden Elektronen-Impulse reduziert. Damit einhergehend ist vorteilhaft auch der elektrische Widerstand reduziert.

Eine weitere Reduktion des elektrischen Widerstandes erfolgt dadurch, dass die beiden Gehäuseteile jeweils einen elektrischen Pol der Batteriezelle bilden. So sind eine Anzahl an zur Verschaltung von Batteriezellen notwendigen Bauteilen reduziert. Beispielsweise ist ein Zellterminal und/oder eine die Batteriezellen elektrisch verbindende Stromschiene nicht weiter notwendig. Somit sind die Kosten für diese Bauteile, die Herstellungskosten dieser Bauteile und der Aufwand der Montage dieser Bauteile sowie die dafür notwendigen Maschinen einsparbar.

Zudem ist eine vergleichsweise hohe Wärmeabfuhr anhand des jeweiligen als elektrischer Pol verwendeten Hüllenteils erzielbar, da dieses eine vergleichsweise große Kontaktfläche bietet.

Zusammenfassend ist aufgrund des reduzierten elektrischen Widerstands und damit einhergehend aufgrund einer geringeren Wärmeentwicklung eine vergleichsweise hohe Laderate ermöglicht.

Bei der erfindungsgemäßen Batteriezelle sind insbesondere auch aus dem Stand der Technik bekannte elektrochemische Ansätze anwendbar, insbesondere um eine Schnelladefähigkeit zu verbessern oder eine Zellalterung zu verlangsamen. Beispielsweise kann dem Elektrolyt ein Additiv zugegeben, der ein Lithium-Plating verhindert, oder der besonders geeignet für die Bildung des sogenannten Solid Electrolyte Interface (SEI) ist.

Gemäß einer besonders bevorzugten Ausgestaltung der Batteriezelle ist bei jeder der Anoden und/oder bei jeder der Kathoden die Länge der Längs-Kante, entlang welcher sich der Anoden-Kontaktabschnitt oder der Kathoden-Kontaktabschnitt erstreckt, größer als die Länge der Breiten-Kante. Insbesondere beträgt die Länge der Längskante mindestens das Doppelte, vorzugsweise mindestens das Dreifache, der Länge der Breiten-Kante. Mit anderen Worten weist jede der Anoden und/oder jede der Kathoden ein Längen-zu-Breiten-Verhältnis größer als 1, insbesondere größer als 2, vorzugsweise größer als 3 auf. Mit noch anderen Worten ist bei jeder der Anoden und/oder bei jeder der Kathoden der Betrag der Ausdehnung der Längs-Kante in Längsrichtung größer als der Betrag der Ausdehnung deren Breiten-Kante in Breitenrichtung.

Zwar ist im Vergleich zu einer herkömmlichen Batteriezelle, bei welcher ein Ableiterfähnchen an der kurzen Seite der Anode bzw. der Kathode angeordnet ist, ein größerer Bauraum notwendig. Jedoch ist wie im Folgenden dargestellt, der elektrische (ohmsche) Widerstand bei einer gemäß dieser Ausgestaltung ausgebildeten Batteriezelle signifikant verringert. Der elektrische Widerstand eines Leiters kann beschrieben werden durch die Formel $R = ρ \cdot L / A$

Dabei ist R der ohmsche Widerstand des Leiters, ρ eine Materialkonstante des Leiters, L die Länge des Leiters und A der Querschnitt des Leiters. Dadurch, dass der Strom nicht - wie bei der herkömmlichen Batteriezelle - in Längsrichtung der jeweiligen Elektrode, sondern in Breitenrichtung fließt, ist sowohl die Länge L des Leiters reduziert sowie dessen Querschnitt A erhöht und damit einhergehend der ohmsche Widerstand entsprechend verringert.

Entsprechend des vergleichsweise geringen elektrischen Widerstandes ist auch eine Wärmeentwicklung aufgrund des elektrischen Widerstandes vorteilhaft entsprechend verringert.

Zusätzlich ist im Vergleich zu einer herkömmlichen Batteriezelle, bei welcher ein Ableiterfähnchen an der kurzen Seite der Anode bzw. der Kathode angeordnet ist, eine Wärmeableitung verbessert. Da sich der Anoden- und der Kathoden-Kontaktabschnitt entlang der gesamten Längs-Kante erstreckt und mit dem jeweiligen Hüllenteil kontaktiert ist, kann beim Laden oder Entladen der Batteriezelle entstehende Wärme über die vergleichsweise großflächigen Hüllenteile abgeleitet, und so die Batteriezelle besonders effektiv gekühlt werden.

In besonders bevorzugter Ausgestaltung der Batteriezelle bildet das erste Hüllenteil eine (äußere, batteriezellenaußenseitige) Anlagefläche für ein zweites Hüllenteil einer weiteren Batteriezelle oder für eine Kühlplatte. Zudem ist mittels des zweiten Hüllenteils eine (äußere, batteriezellenaußenseitige) Anlagefläche für ein erstes Hüllenteil einer weiteren Batteriezelle gebildet. Mit anderen Worten ist das erste Hüllenteil dazu vorgesehen und eingerichtet, dass ein zweites Hüllenteil einer weiteren Batteriezelle an das erste Hüllenteil angelegt wird. Das zweite Hüllenteil ist dazu vorgesehen und eingerichtet, dass ein erstes Hüllenteil einer weiteren Batteriezelle an das zweite Hüllenteil angelegt wird.

Auf diese Weise ist besonders vorteilhaft die Anode der Batteriezelle mittels des ersten Hüllenteils und mittels des zweiten Hüllenteils der weiteren Batteriezelle mit der Kathode der weiteren Batteriezelle elektrisch kontaktiert. In analoger Weise ist besonders vorteilhaft die Kathode der Batteriezelle mittels des zweiten Hüllenteils und mittels des ersten Hüllenteils einer weiteren Batteriezelle mit der Anode der weiteren Batteriezelle elektrisch kontaktiert. Zusammenfassend ist anhand des Anlegens der Batteriezellen aneinander eine besonders einfache Kontaktierung realisierbar. Es sind also keine weiteren Teile oder Fügeprozesse für das elektrische Kontaktieren der Batteriezelle mit der weiteren Batteriezelle notwendig, so dass Kosten sowie ein Herstellungsaufwand einer Verschaltung reduziert sind. Im Vergleich zu herkömmlichen Batteriezellen, welche anhand einer Stromschiene elektrisch miteinander verbunden sind, ist hierzu eine zusätzliche Stromschiene oder dergleichen nicht notwendig. Insbesondere ist auch die Bildung einer intermetallischen Phase, welche einen vergleichsweise großen elektrischen Widerstand aufweist, zwischen einer solchen Stromschiene und einem Stromableiter aus der Batteriezelle aufgrund deren Fügung miteinander und damit einhergehend ein erhöhter ohmscher Widerstand der miteinander verschalteten Batteriezellen vermieden. Sofern die Batteriezelle an einer, Insbesondere elektrisch leitenden, Kühlplatte anliegt ist auch eine vergleichsweise effektive Kühlung der Batteriezelle realisierbar.

Besonders bevorzugt wird als Anlagefläche ein einen Boden oder ein einen Deckel bildenden Abschnitt des ersten oder des zweiten Hüllenteils für die Anlagefläche herangezogen. Der Boden und der Deckel sind dabei zweckmäßigerweise zueinander parallel orientiert und weisen eine vergleichsweise große Ausdehnung auf, so dass eine vergleichsweise einfache Anordnung bzw. ein vergleichsweise niederohmiger Kontakt zwischen der Batteriezelle und einer der weiteren Batteriezellen ermöglich ist.

Beispielsweise sind die beiden Hüllenteile hierzu jeweils wannenförmig ausgebildet und weisen eine den Boden bzw. eine den Deckel bildende Grundfläche mit umfangsseitig emporstehendem Rand auf. Alternativ hierzu ist einer der beiden Hüllenteile wannenförmig ausgebildet und das andere Hüllenteil als ebener Deckel. Die wannenförmigen Hüllenteile bzw. das wannenförmige Hüllenteil ist dabei insbesondere durch tiefziehen hergestellt.

Alternativ sind die beiden Hüllenteile im Querschnitt jeweils L-förmig mit einem Horizontal-(L-)Schenkel und mit einem hierzu quer verlaufenden Vertikal-(L-)Schenkel ausgebildet, wobei die kürzeren Horizontal-Schenkel die Stirnseiten der Hülle bilden. Das Freiende des Horizontal-Schenkels des ersten Hüllenteils ist im Montagezustand am Freiende des Vertikal-Schenkels des zweiten Hüllenteils und das Freiende des Vertikal-Schenkels des ersten Hüllenteils am Freiende des Horizontal-Schenkels des zweiten Hüllenteils angeordnet.

Besonders bevorzugt sind die beiden Hüllenteile aus demselben Material gebildet, wobei das Material elektrisch leitfähig ist. Geeigneter Weise ist das erste und das zweite Hüllenteil aus Aluminium oder aus einem, insbesondere korrosionsbeständigen, also nichtrostenden, Edelstahl gebildet. Eine Dicke der Wand, mit anderen Worten eine Wandstärke des ersten Hüllenteils und eine Dicke der Wand des zweiten Hüllenteils beträgt dabei zwischen 10 µm und 2 mm, vorzugsweise zwischen 0,1 mm und 1 mm. Das erste und das zweite Hüllenelement ist also entsprechend der Dicke der Wand folienartig und somit flexibel oder blechartig und vergleichsweise biegesteif.

Gemäß einer vorteilhaften Weiterbildung der Batteriezelle ist an einer der Elektrodenanordnung zugewandten Innenseite des ersten Hüllenteils ein Leiterelement angeordnet. Mit anderen Worten ist das Leiterelement innerhalb der Batteriezelle angeordnet. Das Leiterelement ist elektrisch und vorzugsweise zudem auch thermisch leitend. Des Weiteren ist das Leiterelement vorzugsweise mit dem ersten Hüllenteil gefügt. Das Leiterelement ist elektrisch mit dem ersten Hüllenteil verbunden. Dabei ist jeder Anoden-Kontaktabschnitt mit dem Leiterelement elektrisch verbunden. Somit ist der Anoden-Kontaktabschnitt oder sind die Anoden-Kontaktabschnitte mittels des Leiterelements elektrisch mit dem ersten Hüllenteil verbunden.

Das Leiterelement ist beispielsweise als eine elektrisch leitende und zweckmäßigerweise gegen einen Elektrolyten beständige (also nicht reaktive) Beschichtung des Hüllenteils in einem Kontaktbereich für die Anoden-Kontaktabschnitte ausgebildet.

Alternativ hierzu ist das Leiterelement als eine Stromsammlerschiene ausgebildet. Insbesondere ist das Leiterelement aus Kuper, vorzugsweise CU-OFE (oxigen free copper), oder aus Nickel gebildet.

Weiter alternativ ist das Leiterelement beispielsweise als eine Walzplattierung aus Nickel oder aus Kupfer gebildet, wobei das Leiterelement beim Walzplattieren mit dem ersten Hüllenteil gefügt wird.

Vorzugsweise weist das Leiterelement eine Länge auf, welche gleich der oder größer als die Ausdehnung der Anoden-Kontaktabschnitte in Längsrichtung ist, wobei sich das Leiterelement in Längsrichtung der Anoden, also entlang der den Anoden-Kontaktabschnitt aufweisenden Längs-Kante, erstreckt. Insbesondere erstreckt sich das Leiterelement entlang der gesamten Ausdehnung der Batteriezelle in Längsrichtung. Auf diese Weise ist eine besonders große Kontaktfläche zwischen dem Leiterelement und dem jeweiligen Anoden-Kontaktabschnitt gebildet und ein ohmscher Widerstand der Batteriezelle vorteilhaft weiter reduziert.

Beispielsweise ist ein weiteres Leiterelement, welches im Folgenden auch als zweites Leiterelement bezeichnet wird, an einer der Elektrodenanordnung zugewandten Innenseite des zweiten Hüllenteils angeordnet. Das weitere (zweite) Leiterelement ist elektrisch und vorzugsweise zudem auch thermisch leitend. Zudem ist das weitere (zweite) Leiterelement vorzugsweise mit dem zweiten Hüllenteil gefügt. Das (zweite) Leiterelement ist elektrisch mit dem zweiten Hüllenteil verbunden. Dabei ist jeder Kathoden-Kontaktabschnitt mit dem weiteren (zweiten) Leiterelement elektrisch verbunden. Somit ist der Kathoden-Kontaktabschnitt oder sind die Kathoden-Kontaktabschnitte mittels des weiteren (zweiten) Leiterelements elektrisch mit dem zweiten Hüllenteil verbunden. Insbesondere ist das weitere (zweite) Leiterelement aus Aluminium, beispielswiese AL-99,5 gebildet.

Gemäß einer geeigneten Ausgestaltung ist das erste Hüllenelement und zusätzlich oder alternativ das zweite Hüllenelement jeweils an dessen Innenseite, somit an derjenigen Seite welche der Elektrodenanordnung zugewandt ist, mit einem Isolator versehen. Zum einen ist anhand des Isolators ein Kurzschluss zwischen einer der Anoden oder einer der Kathoden und einem der Hüllenteile vermieden. Zudem ist anhand des Isolators auch ein Schutz des jeweiligen Hüllenteils gegen den Elektrolyten gebildet. Auf diese Weise ist eine unerwünschte chemische Reaktion des Elektrolyten sowie ein sogenanntes Lithium-Plating oder eine Interkalation von Lithium in das, beispielsweise aus Aluminium gebildeten, Hüllenteil vermieden. Der Isolator wirkt also zumindest elektrisch isolierend. Eine Dicke des, insbesondere als Kunststoffbeschichtung ausgebildeten, Isolators beträgt beispielsweise zwischen 10 µm und 1mm, insbesondere zwischen 0,25 mm und 0,5 mm.

Vorzugsweise sind das erste Hüllenteil und das zweite Hüllenteil zusätzlich anhand des Isolators elektrisch voneinander getrennt, mit anderen Worten gegeneinander elektrisch isoliert, sind. Somit ist ein Kurschluss zwischen den beiden Hüllenteilen verhindert. Beispielsweise ist der Isolator in einem Fügebereich oder in einem zum Fügen der beiden Hüllenteil vorgesehenen Flanschbereich zwischen den beiden Hüllenteilen angeordnet.

Der Isolator ist hierzu aus einen, vorzugsweise aufschmelzbaren Kunststoff, wie beispielsweise Polyamid (PA), Polyethylen (PE), Polypropylen (PP) oder dergleichen gebildet. Beispielsweise weist der Isolator eine einzige Schicht aus Kunststoff oder alternativ eine Vielzahl an, insbesondere miteinander gefügten, Schichten aus Kunststoff auf. Beispielsweise ist der Isolator für eine vergleichsweise hohe Temperaturbelastbarkeit, beispielsweise für den Fehlerfall der Batteriezelle wie einem thermal runaway, aus einem hochtemperaturfesten Kunststoff, insbesondere aus Polyetheretherketon (PEEK), Polyetherketon (PEK), thermoplastische Polyimide (TPI), Polysulfon (PSU), Polyethersulfon (PES), Polyphenylensulfon (PPSU), oder Polyphenylensulfid (PPS) gebildet. Diese Kunststoffe weisen vorteilhaft einen Schmelzpunkt größer als 150 °C auf.

Insbesondere ist der Isolator auf das jeweilige Hüllenteil aufgebracht, insbesondere ist der Isolator mit dem jeweiligen Hüllenteil gefügt, so dass ein Verrutschen oder ein Lösen des Isolators von dem Hüllenteil vermieden ist.

Zweckmäßigerweise weist der Isolator eine Aussparung zum Kontaktieren der Anoden- bzw. der Kathoden-Kontaktabschnitte auf.

Sofern das Leiterelement zwischen dem ersten Hüllenteil und den Anoden-Kontaktabschnitten oder dem Anoden-Kontaktabschnitt angeordnet ist, ist das Leiterelement in der Aussparung angeordnet. Sofern das weitere (zweite) Leiterelement zwischen dem zweiten Hüllenteil und den Kathoden-Kontaktabschnitten oder dem Kathoden-Kontaktabschnitt angeordnet ist, ist das weitere (zweite) Leiterelement in einer entsprechenden Aussparung angeordnet.

Zweckmäßigerweise ist das Leiterelement und gegebenenfalls das weitere Leiterelement umfangsseitig mit dem Isolator fluiddicht gefügt. Auf diese Weise ist ein Lithium-Plating oder eine Interkalation von Lithium in das, insbesondere aus Aluminium gebildete, Hüllenteil, insbesondere im Bereich des aus Kupfer gebildeten Anoden-Kontaktabschnitts, bei Anwesenheit des Elektrolyten verhindert.

Für das fluiddichte Fügen ist das Leiterelement gemäß einer zweckmäßigen Ausgestaltung umfangsseitig mit einem Vorsiegelband, insbesondere fluiddicht, gefügt. Das Vorsiegelband ist wiederum mit dem Isolator fluiddicht gefügt. Zusammenfassend ist das Leiterelement mittels des Vorsiegelbands fluiddicht mit dem Isolator gefügt. Vorzugsweise sind hierbei das Vorsiegelband und der Isolator aus dem gleichen, elektrisch isolierenden Material gebildet.

Im Zuge der Herstellung der Batteriezelle wird also zunächst das Leiterelement umfangsseitig mit dem Vorsiegelband gefügt. Insbesondere wird das Vorsiegelband hierzu erwärmt und/oder gegen das Leiterelement gepresst. Anschließend wird das Leiterelement mit dem Vorsiegelband in die Aussparung der Isolation eingebracht und das Vorsiegelband, insbesondere durch Verpressen und/oder durch Erwärmen, mit dem Isolator fluiddicht gefügt. Zusammenfassend ist das Leiterelement anhand des Vorsiegelbands eingesiegelt.

Hierzu weist der Isolator an dessen die Aussparung begrenzenden Seite eine Kontur auf, die zur Kontur des mit dem Vorsiegelband gefügten Leiterelements korrespondiert. Beispielsweise weist das Vorsiegelband einen dreieckigen Querschnitt auf. Die die Aussparung begrenzende Seite des Isolators ist korrespondierend hierzu gegen die Fläche des Hüllenteils geneigt. Auf diese Weise ist eine Kontakt- und Fügefläche zwischen dem Vorsiegelband und dem Isolator erhöht. Alternativ hierzu ist das Vorsiegelband L-Förmig, wobei einer der L-Schenkel diejenige Seite des Leiterelements überragt, welche der Elektrodenanordnung zugewandt ist. Somit ist eine Kontakt- und Fügefläche und damit einhergehend eine vergleichsweise zuverlässige Fügung zwischen dem Leiterelement und dem Vorsiegelband hergestellt.

Alternativ oder vorzugsweise zusätzlich zur korrespondierenden Form des Isolators ist die Dicke des Isolators, also dessen Ausdehnung vom Hüllenteil in Richtung der Elektrodenanordnung, im Montagezustand, also im Zustand in welchem der Isolator mit dem Vorsiegelband gefügt ist, gleich der Dicke des mit dem Vorsiegelband gefügten Leiterelements. Insbesondere bildet das Vorsiegelband und der Isolator hierbei eine glatte Fläche an der der Elektrodenanordnung zugewandten Seite.

Vor der Montage, weist das mit dem Vorsiegelband gefügte Leiterelement eine beispielsweise eine, vorzugsweise lediglich geringfügig, größere Dicke auf als der Isolator. Im Zuge des Fügens des Vorsiegelbands, insbesondere beim dessen Schmelzen, wird das Vorsiegelband verformt. Im Zuge des Verformens können somit Abweichungen von der Form des Isolators ausgeglichen werden. Mit anderen Worten werden also Toleranzen zwischen der Form des Vorsiegelbandes und des Isolators, insbesondere in den Eckbereichen ausgeglichen.

Insbesondere sofern das Leiterelement aus Kupfer gebildet ist, ist dieses gemäß einer geeigneten Ausgestaltung mit einer Nickel-Beschichtung versehen. Die Nickel-Beschichtung erfüllt eine Doppelfunktion. So ist, sofern der Anoden-Kotaktabschnitt oder die Anoden-Kontaktabschnitte mit dem Leiterelement anhand Laserschweißen gefügt werden, ein Reflexionsgrad verringert, und somit ist ein Einkoppeln des Lasers erleichtert. Zum anderen weist die Nickel-Beschichtung eine vergleichsweise raue Oberfläche auf. Beispielsweise weist die Nickel-Beschichtung Poren auf. Aufgrund dessen ist ein Fügen des Vorsiegelbandes durch Verformung und/oder Schmelzen erleichtert und damit einhergehend ein Eingreifen des (verformten und/oder geschmolzenen) Vorsiegelbands in die raue Oberfläche bzw. in die Poren realisiert. Mit anderen Worten ist ein Formschluss erreicht, was in einer besonders zuverlässigen Fügung resultiert.

Weiterhin bildet die Nickel-Beschichtung einen Korrosionsschutz des Leiterelements gegen den Elektrolyten.

Gemäß einer vorteilhaften Weiterbildung weist das Leiterelement an deren der Elektrodenanordnung zugewandten Seite, also an derjenigen Seite, die mit dem Anoden-Kontaktabschnitt kontaktiert wird, emporstehende Fortsätze auf. Zusätzlich oder alternativ sind auch Vertiefungen in diese Seite eingebracht. Die Fortsätze und/oder die Vertiefungen bilden eine Oberflächenstruktur. Beispielsweise weist auch das weitere (zweite) Leiterelement in analoger Weise solche Fortsätze und/oder Vertiefungen auf.

Zum einen sind anhand der Oberflächenstruktur eine Kontaktfläche des Leiterelements zum Anoden-Kontaktabschnitt oder eine Kontaktfläche des weiteren Leiterelements zum Kathoden-Kontaktabschnitt vorteilhaft vergrößert. Zum anderen ist bei einem Eingreifen der Anoden- oder Kathoden-Kontaktabschnitte in die Vertiefungen oder bei einem umfassen der Fortsätze anhand Anoden- oder Kathoden-Kontaktabschnitte ein Formschluss in einer Richtung parallel zur dieser Seite gebildet, so dass eine zuverlässige Fügung zwischen dem jeweiligen Leiterelement und dem jeweiligen Kontaktabschnitt realisiert ist.

Beispielsweise sind die Fortsätze halbkugelförmig, pyramidenförmig, pyramidenstumpfförmig, zylinderförmig oder prismenartig, wobei bei der prismenartigen Ausgestaltung eine Grundfläche senkrecht zur der Elektrodenanordnung zugewandten Seite orientiert ist und das Prisma sich parallel zu dieser Seite erstreckt.

Beispielsweise ist die Hülle außenseitig mit einer elektrisch leitfähigen, also mit einer stromleitfähigen, Antioxidationsbeschichtung versehen. Auf diese Weise ist eine Oxidation und eine damit einhergehende Erhöhung des elektrischen Widerstands der Hüllen und dessen beider Hüllenteile verhindert oder eine Gefahr dessen zumindest reduziert. Die Funktion der beiden Hüllenteile als elektrische Pole der Batteriezelle ist somit vorteilhaft gegen eine Erhöhung deren elektrischen Widerstands geschützt.

Beispielsweise ist zusätzlich eine solche Antioxidationsbeschichtung auch im Bereich der Aussparung für das Leiterelement und/oder im Bereich der Aussparung für das weitere Leiterelement auf der Innenseite des jeweiligen Hüllenteils, also auf der der Elektrodenanordnung zugewandten Seite, aufgebracht. Somit ist im Zuge der Herstellung auch eine Oxidation des jeweiligen Hüllenteils im Bereich der Aussparung, insbesondere solange die Aussparung nicht anhand des Leiterelements und/oder anhand der Anoden-Kontaktabschnitt oder der Kathoden-Kontaktabschnitte abgedeckt ist, vermieden.

Gemäß einer geeigneten Ausgestaltung ist jeder Anoden-Kontaktabschnitt zu einer Oberseite der Elektrodenanordnung gebogen, welche dem ersten Hüllenteil, insbesondere einem den Boden oder den Deckel bildenden Bereich des ersten Hüllenteils, zugewandt ist. Dabei ist die Biegung um eine Achse erfolgt welche parallel zu deren Längs-Kante orientiert ist. In analoger Weise sind jeder der Kathoden-Kontaktabschnitte zu einer Unterseite der Elektrodenanordnung gebogen, welche dem zweiten Hüllenteil, insbesondere einem den Boden oder den Deckel bildenden Bereich des ersten Hüllenteils, zugewandt ist. Dabei ist die Biegung um eine Achse erfolgt welche parallel zu deren Längs-Kante orientiert ist.

Bei der Ausgestaltung der Elektrodenanordnung als Elektrodenstapel ist unter der auch als erste Grundseite bezeichnete Oberseite insbesondere diejenige Seite zu verstehen, welche in Stapelrichtung der Elektroden die oberste zur Stapelrichtung senkrecht orientierte Fläche bildet. Die auch als zweite Grundseite bezeichnete Unterseite ist insbesondere die unterste zur Stapelrichtung senkrecht orientierte Fläche der Elektrodenanordnung. Bei der Ausgestaltung der Elektrodenanordnung als Flachwickel wird als Oberseite insbesondere eine derjenigen beiden äußeren Seiten (Seitenfläche) der Elektrodenanordnung verstanden, welche sich im Wesentlichen parallel zur Fläche des flachen Wickeldorns erstreckt. Die Unterseite ist insbesondere die jeweils andere sich im Wesentlichen parallel zur Fläche des flachen Wickeldorns erstreckende äußere Seite (Seitenfläche) des Flachwickels.

Alternativ hierzu ist jeder der Anoden-Kontaktabschnitte mit einer Stirnseite des ersten Hüllenteils und jeder der Kathoden-Kontaktabschnitte mit einer Stirnseite des zweiten Hüllenteils elektrisch verbunden. Die Stirnseiten des jeweiligen Hüllenteils sind dabei die zum Boden und zum Deckel senkrecht orientierten, und insbesondere vergleichsweise kleinen, Seiten des jeweiligen Hüllenteils.

Gemäß einer zweckmäßigen Weiterbildung ist im Bereich der Kontaktstelle der Anoden-Kontaktabschnitte mit dem ersten Hüllenteil oder mit dem Leiterelement ein Isolatorelement an der Elektrodenanordnung angeordnet. Zusätzlich oder alternativ ist im Bereich der Kontaktstelle der Kathoden-Kontaktabschnitte mit dem zweiten Hüllenteil oder mit dem weiteren (zweiten) Leiterelement ein Isolatorelement an der Elektrodenanordnung angeordnet. Mit anderen Worten ist zwischen der Kontaktstelle und der Elektrodenanordnung das jeweilige Isolatorelement angeordnet.

Anhand des Isolatorelements ist vorteilhaft ein Kurzschluss zwischen den Anoden und den Kathoden sowie ein Li-Plating vermieden.

Gemäß einer zweckmäßigen Ausgestaltung der Batteriezelle ist bei jeder der Anoden zwischen deren Anoden-Kontaktabschnitt und deren mit Aktivmaterial versehenen ersten Abschnitt ein mit einem elektrisch isolierenden Material versehenen Isolationsabschnitt angeordnet. Mit anderen Worten ist hinsichtlich der Breitenrichtung der Isolationsabschnitt vom Anoden-Kontaktabschnitt und vom beschichteten ersten Abschnitt flankiert. Zweckmäßigerweise ist der Isolationsabschnitt in Längsrichtung durchgehend. Alternativ oder vorzugsweise zusätzlich hierzu ist in analoger Weise bei jeder der Kathoden zwischen dessen Kathoden-Kontaktabschnitt und deren mit Aktivmaterial versehenen ersten Abschnitt ein mit einem elektrisch isolierenden Material versehenen Isolationsabschnitt angeordnet.

Vorzugsweise ist der Isolationsabschnitt beidseitig auf der jeweiligen Anode und/oder der jeweiligen Kathode vorhanden. Insbesondere ist der Isolationsabschnitt anhand einer elektrisch isolierenden Beschichtung gebildet, welches auf das Substrat aufgebracht ist.

Der Isolationsabschnitt verhindert dabei einen Kurzschluss zwischen einer der Anoden und einer der Kathoden, insbesondere in einem Bereich, in welchem der jeweilige Kontaktabschnitt für die Kontaktierung mit der Hülle gebogen ist und sich in der Nähe einer der Kanten einer der Kathode bzw. einer der Anoden angeordnet ist.

Beispielsweise werden die Anoden-Kontaktabschnitte mit dem Leiterelement oder mit dem ersten Hüllenteil durch einen Schweißprozess, insbesondere durch Laser-, Widerstandspunkt- oder Ultraschallschweißen, und/oder anhand eines Formschlusses des Anoden-Kontaktabschnitte mit dem Leiterelement miteinander gefügt. Beispielsweise werden die Anoden-Kontaktabschnitte also stoffschlüssig oder formschlüssig mit dem Leiterelement oder mit dem ersten Hüllenteil gefügt. Analoges gilt für die Kathoden-Kontaktabschnitte.

Gemäß einer vorteilhaften Ausgestaltung sind die Anoden-Kontaktabschnitte zusätzlich oder alternativ hierzu mit dem Leiterelement oder mit dem ersten Hüllenteil kraftschlüssig, also reibschlüssig gefügt. Zusätzlich oder alternativ sind die Kathoden-Kontaktabschnitte mit dem weiteren Leiterelement oder mit dem zweiten Hüllenteil kraftschlüssig gefügt. Hierzu sind die Anoden-Kontaktabschnitte oder der Anoden-Kontaktabschnitt zwischen der Elektrodenanordnung und dem ersten Hüllenteil oder zwischen der Elektrodenanordnung und dem Leiterelement geklemmt. Analog hierzu sind die Kathoden-Kontaktabschnitte oder der Kathoden-Kontaktabschnitt zwischen der Elektrodenanordnung und dem zweiten Hüllenteil oder zwischen der Elektrodenanordnung und dem weiteren Leiterelement geklemmt.

Insbesondere herrscht dabei in der Batteriezelle eine verringerte Atmosphäre, also ein Druck kleiner als 1 bar.

Vorzugsweise ist eine Dicke des ersten und des zweiten Hüllenteils derart gewählt, dass bei einer Ausdehnung und bei einem Zusammenziehen (Schrumpfen) der Batteriezelle, also bei der sogenannten Zellatmung, die Kontaktabschnitte sicher geklemmt bleiben. Mit anderen Worten ist die Dicke der Hülle derart gewählt, dass deren Ausdehnung ein vorgegebene Maximalausdehnung, welche eine noch sichere Kontaktierung der jeweiligen Kontaktabschnitte mit der Hülle repräsentiert, nicht überschritten wird. Somit ist bei der entsprechenden Ausdehnung der Hüllenteile vermieden, dass die Anoden-Kontaktabschnitte und/oder die Kathoden-Kontaktabschnitte aus der Klemmung lösen.

Gemäß einer vorteilhaften Ausgestaltung der Batteriezelle ist die Dicke (d_{I}) des Isolators gleich der Summe aus der Dicke (d_{An}) der Anoden-Kontaktabschnitte, also aller Anoden-Kontaktabschnitte, der Dicke (d_{L}) des Leiterelements und der Dicke (d_{E}) des Isolatorelements. Mit anderen Worten gilt: ${d}_{I} = {d}_{An} + {d}_{L} + {d}_{E} .$

Dies gilt in analoger Weise für die Dicke der Kathoden-Kontaktabschnitte und der Dicke des weiteren (zweiten) Leiterelements.

Auf diese Weise ist im Bereich des Leiterelements und des diesen umfassenden Isolators eine im Wesentlichen gleiche Dicke der Batteriezelle realisiert. Ein auf die Batteriezelle wirkender Druck, beispielsweise aufgrund der Zellatmung und/oder aufgrund einer Verspannung gegen die Kühlplatte oder gegen die weitere Batteriezelle wirkt somit vergleichsweise homogen auf die Elektrodenanordnung. Damit einhergehend ist die Abscheidung von metallischem Lithium und ein entsprechender Kapazitätsverlust vermieden. Oder die Gefahr dessen zumindest reduziert.

Ein weiterer Aspekt der Erfindung betrifft ein auch als Zellmodul oder als Batteriezellenmodul bezeichnetes Batteriemodul für eine Traktionsbatterie. Dieses weist eine Anzahl an Batteriezellen auf, welche jeweils in einer der oben dargestellten Varianten ausgebildet sind. Insbesondere weist also jede der Batteriezellen mindestens eine Anode, entlang deren gesamten Längs-Kante sich der Anoden-Kontaktabschnitt erstreckt, sowie mindestens eine Kathode auf, entlang deren gesamten Längs-Kante sich der Kathoden-kontaktabschnitt erstreckt, wobei der Anoden-Kontaktabschnitt mit den ersten Hüllenteil und der Kathoden-Kontaktabschnitt mit dem zweiten Hüllenteil, welches elektrisch gegenüber dem ersten Hüllenteil isoliert ist, elektrisch verbunden sind.

Die Batteriezellen des Batteriemoduls sind hinsichtlich einer Stapelrichtung nebeneinander angeordnet. Dabei ist das erste Hüllenteil einer ersten der Batteriezellen elektrisch mit dem zweiten Hüllenteil der in Stapelrichtung nächsten (zweiten) Batteriezelle elektrisch verbunden.

Insbesondere liegt das erste Hüllenteil der ersten Batteriezelle an dem zweiten Hüllenteil der zweiten Batteriezelle an.

Beispielsweise sind die Batteriezellen des Batteriemoduls anhand von Federelementen gegeneinander verspannt und somit in Position gehalten.

Aufgrund der elektrischen Kontaktierung der Batteriezellen durch das aneinander anliegen sind keine weiteren Zellterminals oder Verschaltelemente wie Kupferschienen oder dergleichen notwendig. Aufgrund dessen sind Kosten und Gewicht eingespart, ein vergleichsweise einfacher Aufbau des Batteriemoduls realisiert und ein Bauraum vergleichsweise effizient ausgenutzt.

Gemäß einer vorteilhaften Weiterbildung des Batteriemoduls ist zumindest zwischen zwei der Batteriezellen des Batteriemoduls eine elektrisch leitende Kühlplatte angeordnet. Diese wird zweckmäßigerweise von einem elektrisch nicht leitenden Kühlmittel durchflossen oder durchströmt. Auf diese Weise kann eine Wärmeabfuhr über die Hüllenteile durch eine vergleichsweise große Fläche, nämlich durch die Anlagefläche des jeweiligen Hüllenteils, erfolgen. Aufgrund der elektrisch leitenden Ausgestaltung der Kühlplatte sind die an dieser anliegenden Batteriezellen weiterhin elektrisch miteinander verbunden.

Zusätzlich oder alternativ ist jeweils eine elektrisch leitende Kühlplatten endseitig in bzw. gegen die Stapelrichtung an dem Stapel aus Batteriezellen angeordnet. Mit anderen Worten sind dann die nebeneinander angeordneten Batteriezellen hinsichtlich der Stapelrichtung von jeweils einer Kühlplatte flankiert.

Ein weiterer Aspekt der Erfindung betrifft ein elektrisch angetriebenes Kraftfahrzeug mit einer Traktionsbatterie. Diese weist mindestens ein Batteriemodul in einer der oben dargestellten Varianten auf.

Zusätzlich oder alternativ hierzu weist die Traktionsbatterie mindestens eine Batteriezelle in einer der oben dargestellten Varianten auf. Beispielsweise sind die Batteriezellen der Traktionsbatterie in einer sogenannten "Cell-to Pack" - Anordnung (CTP- Anordnung) angeordnet. Hierbei sind die Batteriezellen, insbesondere ohne Modulgehäuse oder dergleichen, direkt in einem Gehäuse der Traktionsbatterie aufgenommen. In analoger Weise zum oben dargestellten Batteriemodul sind die Batteriezellen des Batteriemoduls vorzugsweise elektrisch in Serie miteinander verschaltet. Hierzu sind die Batteriezellen der Traktionsbatterie hinsichtlich vorzugsweise hinsichtlich einer Stapelrichtung nebeneinander angeordnet, wobei das erste Hüllenteil einer (ersten) der Batteriezellen elektrisch mit dem zweiten Hüllenteil der in Stapelrichtung nächsten (zweiten) Batteriezelle elektrisch verbunden ist. Insbesondere liegt das erste Hüllenteil der ersten Batteriezelle an dem zweiten Hüllenteil der zweiten Batteriezelle an.

Beispielsweise werden im Gehäuse der Traktionsbatterie zwei dieser Stapel aus Batteriezellen anhand einer Stromschiene miteinander parallel geschaltet.

Nachfolgend werden Ausführungsbeispiele der Erfindung anhand einer Zeichnung näher erläutert. Darin zeigen:
- Fig. 1: schematisch ein elektrisch angetriebenes Kraftfahrzeug mit einer Traktionsbatterie, welch eine Anzahl an elektrisch miteinander verschalteten Batteriemodulen aufweist, welche wiederum jeweils eine Anzahl an in Serie geschalteten Batteriezellen aufweist,
- Fig. 2: schematisch in einem Querschnitt eines der Batteriemodule mit dessen Batteriezellen, wobei diese zum elektrischen Verbinden aneinander anliegen, und wobei elektrisch leitende Kühlplatten zwischen die Batteriezellen eingebracht sind,

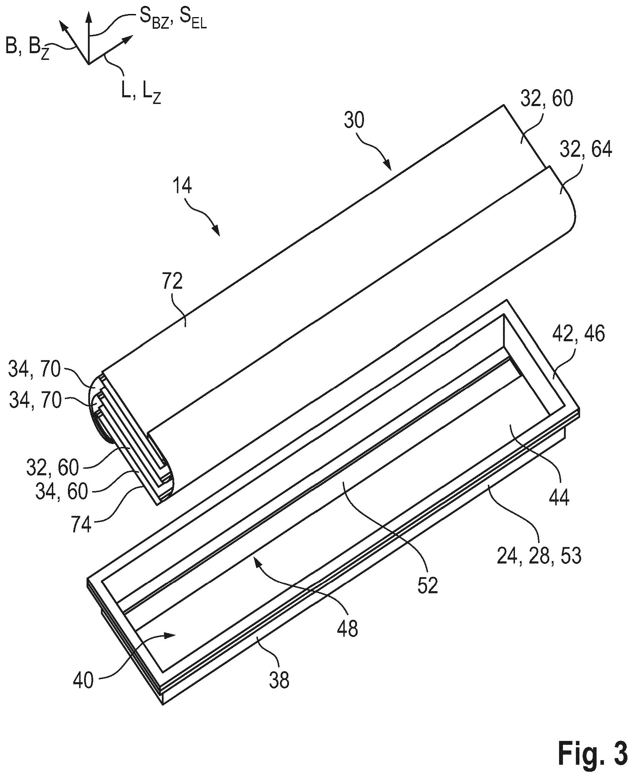

- Fig. 3: schematisch in einer perspektivischen Explosionsdarstellung eine erste Variante der Batteriezelle, wobei deren Elektrodenanordnung als ein Elektrodenstapel ausgebildet ist, und wobei dessen Anoden jeweils sich vollständig entlang deren Längs-Kante erstreckende Anoden-Kontaktabschnitte aufweisen, die zum elektrischen Kontaktieren mit einem ersten Hüllenteil einer Hülle zu einer Oberseite des Elektrodenstapels umgeschlagen sind, und wobei deren Kathoden jeweils sich vollständig entlang deren Längs-Kante erstreckende Kathoden-Kontaktabschnitte aufweisen, die zum elektrischen Kontaktieren mit einem zweiten Hüllenteil der Hülle zu einer Unterseite des Elektrodenstapels umgeschlagen sind,
- Fig. 4: schematisch einen Ausschnitt eines Querschnitts der Batteriezelle gemäß der Fig. 3, wobei die Schnittebene senkrecht zur Längs-Kante einer der Anoden orientiert ist,
- Fig. 5: schematisch einen Ausschnitt eines Querschnitts der Batteriezelle gemäß einer zweiten Variante der Batteriezelle, wobei die Anoden anhand deren Anoden-Kontakt-Abschnitte mit einer Stirnseite des ersten Hüllenteils elektrisch verbunden sind,
- Fig. 6: in Explosionsdarstellung eine der Anoden und eine der Kathoden und einen Separator der Elektrodenanordnung im ausgebreiteten Zustand, und
- Fig. 7a bis 7i: in schematischen Darstellungen das Leiterelement mit einem umfangsseitig an diesem angeordneten Vorsiegelband zum Fügen mit dem Isolator in unterschiedlichen Ausführungsvarianten.

Einander entsprechende Teile und Größen sind in allen Figuren stets mit gleichen Bezugszeichen versehen.

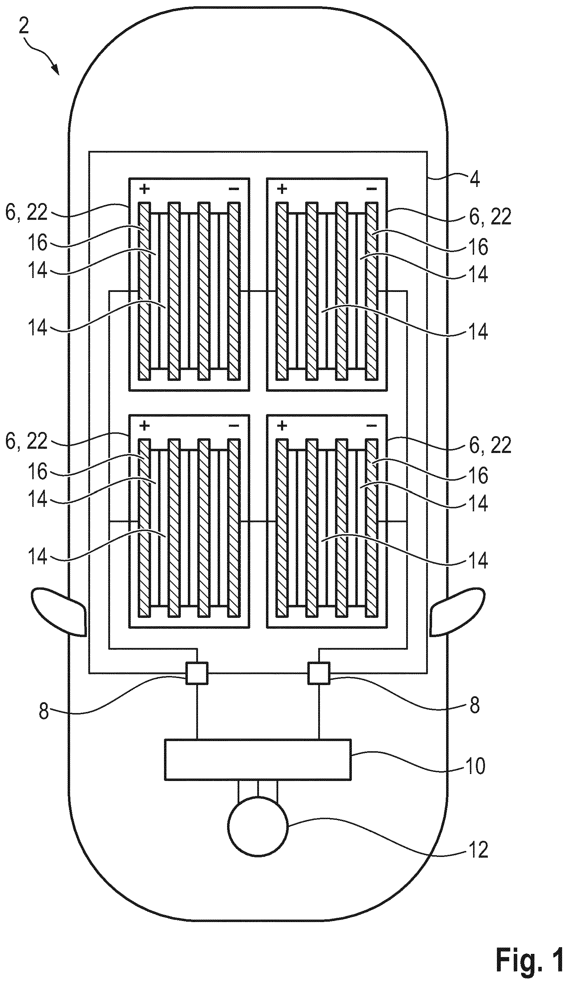

In Fig. 1 ist ein elektrisch angetriebenes Kraftfahrzeug 2 mit einer Traktionsbatterie 4 dargestellt. Die Traktionsbatterie 4 weist eine Anzahl an auch als Zellmodule bezeichneten Batteriemodulen 6 auf, wobei zum Zweck einer besseren Übersichtlichkeit lediglich vier der Batteriemodule 6 dargestellt sind. Die Batteriemodule 6 sind je nach Anforderung an eine Batteriespannung oder an einen Batteriestrom in Serie und/oder parallel zueinander verschaltet. Beispielhaft sind in der Figur 1 jeweils zwei der Batteriemodule 6 in Serie geschaltet, wobei zwei in Serie geschaltete Batteriemodule 6 parallel zu den zwei anderen in Serie miteinander geschalteten Batteriemodulen 6 geschaltet sind. Die Batteriemodule 6 sind mit Batterieanschlüssen 8 für einen elektrischen Verbraucher elektrisch verbunden.

An den Batterieanschlüssen 8 der Traktionsbatterie 4 ist der Verbraucher angeschlossen, welcher hier als ein Wechselrichter 10 eines Antriebstrangs des Kraftfahrzeugs 2 und ein an diesen angeschlossener Elektromotor 12 ausgebildet ist. Der Wechselrichter 10 wandelt den von der Traktionsbatterie 4 bereitgestellten Gleichstrom bzw. die von dieser bereitgestellte Gleichspannung in einen zum Betrieb des Elektromotors 12 geeigneten Wechselstrom bzw. in eine Wechselspannung. Alternativ ist der Elektromotor 12 als, insbesondere permanenterregter, Gleichstrommotor ausgebildet und direkt oder gegebenenfalls über einen DC/DC-Wandler an die Batterieanschlüsse 8 angeschlossen. Zusammenfassend stellt die Traktionsbatterie 4 elektrische Energie für einen Antrieb des Kraftfahrzeugs 2 bereit.

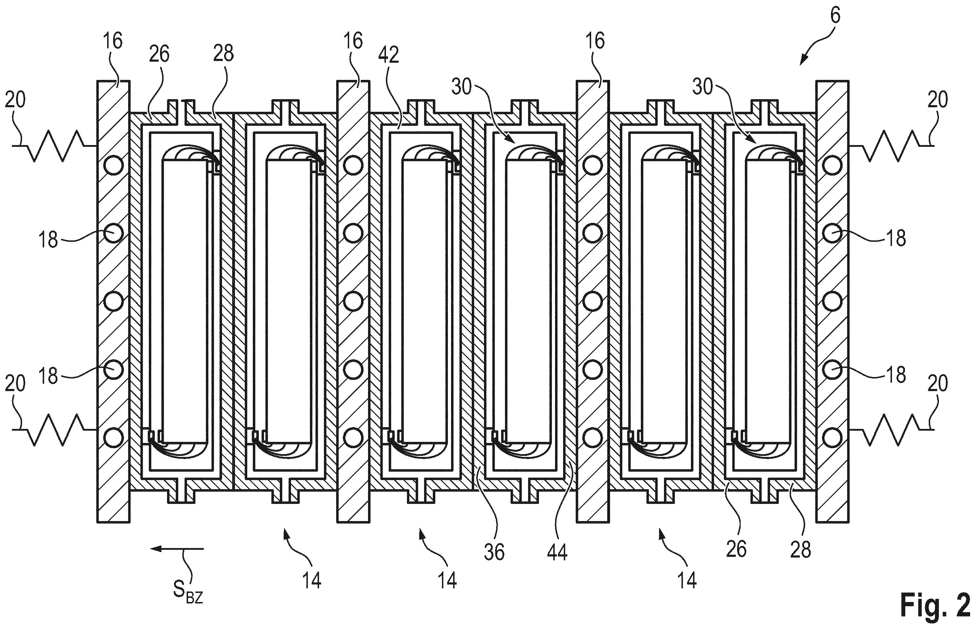

Jedes der Batteriemodule 6 weist wiederum eine Anzahl an als Lithium-Ionen-Batteriezellen ausgebildeten Batteriezellen 14 auf, von denen je Batteriemodul 6 beispielhaft jeweils sechs dargestellt sind. Wie insbesondere in der Fig. 2 erkennbar ist, in welcher eines der Batteriemodule 6 vergleichsweise detailliert dargestellt ist, sind die Batteriezellen 14 in einer Zellen-Stapelrichtung S_{BZ} nebeneinander angeordnet. Dabei sind Kühlplatten 16 sowohl endseitig des Batteriezellenstapels hinsichtlich der Zellen-Stapelrichtung S_{BZ} als auch zwischen den Batteriezellen 14. Gemäß dem in der Fig. 1 und in der Fig. 2 dargestellten Ausführungsbeispiel sind zwischen den Kühlplatten jeweils zwei der Batteriezellen 14 angeordnet. Gemäß nicht weiter dargestellten Ausführungsbeispielen sind zwischen den Kühlplatten lediglich eine (einzige) Batteriezelle oder 3 oder mehr als drei Batteriezellen 14 angeordnet. Die Kühlplatten 16 sind dabei aus einem elektrisch leitenden Material gebildet und weisen jeweils Kanäle 18 auf, durch welche ein elektrisch nicht leitendes Kühlmedium geleitet werden kann.

Die Batteriezellen 14 und die Kühlplatten 16 eines jeweiligen Batteriemoduls sind dabei anhand von schematisch angedeuteten Federelementen 20 gegeneinander verspannt. Also werden die Batteriezellen 14 in Zellen-Stapelrichtung S_{BZ} gegeneinander gedrückt. Jedes der Batteriemodule 6 weist ein, insbesondere elektrisch isolierendes, Modulgehäuse (vgl. Fig. 1) oder Modulgehäuseteile 22 auf, in welchem die Batteriezellen 14 und die Kühlplatten 16 aufgenommen sind.

Bei jedem der Batteriemodule 6 sind dessen Batteriezellen 14 in Serie miteinander verschaltet. Wie insbesondere in den Figuren 3 bis 5 gezeigt ist, weist jede der Batteriezellen hierzu eine Hülle 24 aus einem ersten Hüllenteil 26 und aus einem zu diesem elektrisch isolierten, also nicht elektrisch leitend verbundenen, zweiten Hüllenteil 28 auf. Die beiden Hüllenteile 26 und 28 bilden dabei die beiden elektrischen Pole der jeweiligen Batteriezelle 14. Hierzu umschließt die Hülle 24 eine Elektrodenanordnung 30, welche gemäß dem hier gezeigten Ausführungsbeispiel als Elektrodenstapel ausgebildet ist, gemäß einer nicht weiter dargestellten Alternative allerdings auch als Flachwickel ausgebildet sein kann. Allenfalls ist die Elektrodenanordnung 30 in der Hülle 24 aufgenommen. Dabei sind die Anoden 32 der Elektrodenanordnung 30 mit dem ersten Hüllenteil 26 und die Kathoden 34 der Elektrodenanordnung mit dem zweiten Hüllenteil 28 elektrisch verbunden, also kontaktiert. Die Serienschaltung der Batteriezellen 14 ist dabei in vorteilhaft einfacher Weise durch ein aneinander Anliegen, also einem mechanischen Kontakt, des ersten Hüllenteils 26 einer der Batteriezellen 14 am zweiten Hüllenteil 28 des in Zellen-Stapelrichtung S_{BZ} oder entgegen der Zellen-Stapelrichtung S_{BZ} direkt neben dieser Batteriezelle 14 angeordneten benachbarten Batteriezelle 14 gebildet.

Zudem sind diejenigen Batteriezellen 14 in Serie zueinander geschaltet, die an derselben, elektrisch leitenden Kühlplatte 16 anliegen und somit mit dieser (elektrisch und mechanisch) in Kontakt stehen. Hierbei liegt das erste Hüllenteil 26 einer der beiden die jeweilige Kühlplatte 16 kontaktierenden Batteriezellen 14 und das zweite Hüllenteil 28 der jeweils anderen Batteriezelle 14 an der Kühlplatte an. Folglich sind das erste Hüllenteil 26 der einen der beiden Batteriezellen 14 mittels der elektrisch leitenden Kühlplatte 16 mit dem zweiten Hüllenteil 28 der anderen der beiden Batteriezellen 14 verbunden.

In der Fig. 3 ist eine erste Variante der Batteriezellen 14 in perspektivischer Explosionsdarstellung gezeigt. Zum Zwecke einer besseren Erkennbarkeit wurde das erste Hüllenteil 26 nicht weiter dargestellt. Das erste Hüllenteil 26 ist wannenförmig ausgebildet. Dieses weist also einen Boden 36 mit umfangsseitig emporstehenden Wänden als Stirnseiten 38 auf. Freiendseitig der Stirnseiten 38 erstreckt sich ein Flanschbereich 46 nach außen. Das erste Hüllenteil 26 ist an dessen Innenseite 40, also an dessen der Elektrodenanordnung 30 zugewandten Seite, mit einen (elektrischen) Isolator 42 versehen.

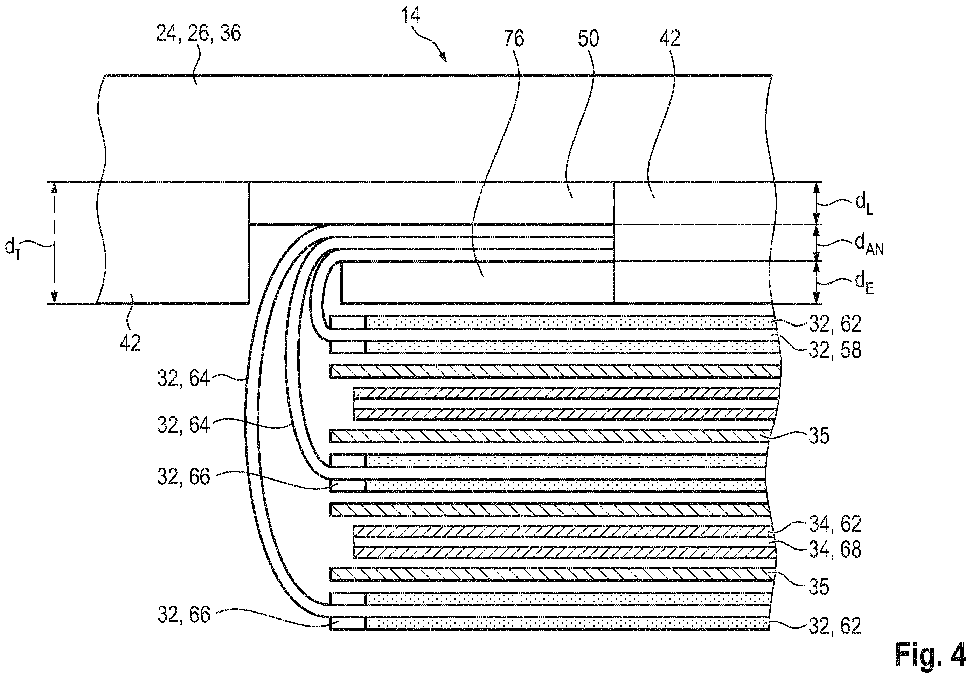

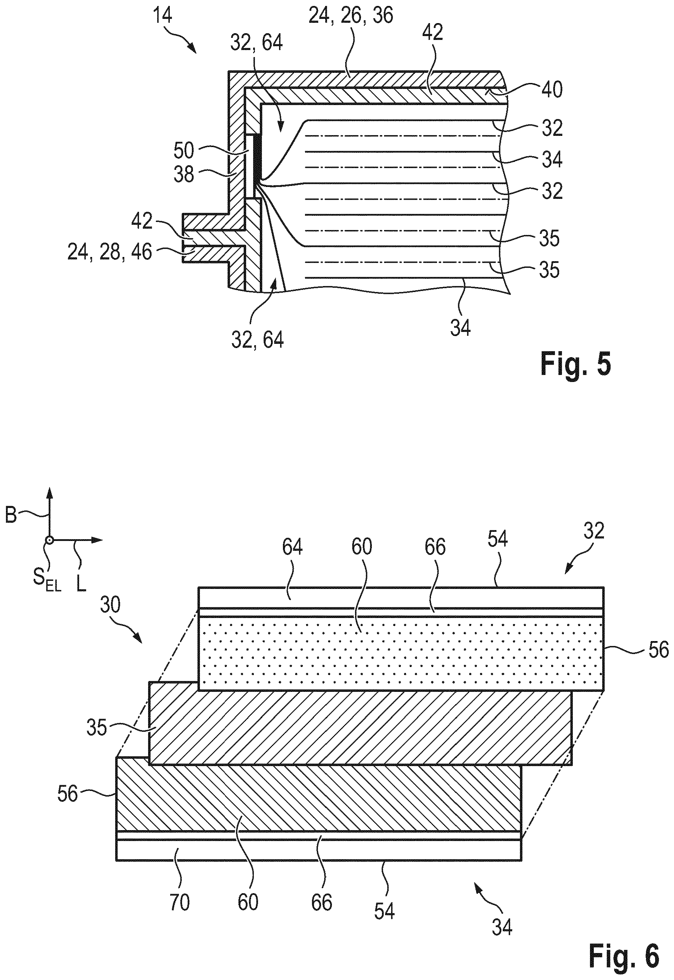

Das zweite Hüllenteil 28 ist in analoger Weise wannenförmig ausgebildet. So weist das zweite Hüllenteils einen Deckel 44 auf, welcher umfangsseitig emporstehende Wände als Stirnseiten 38 aufweist. Freiendseitig der Stirnseiten 38 des zweiten Hüllenteils 28 erstreckt sich ein Flanschbereich 46 nach außen. Das zweite Hüllenteil 28 ist an dessen Innenseite 40 ebenfalls mit dem (elektrischen) Isolator 42 versehen, vgl. beispielsweise Figuren 4 und 5.

Der Isolator 42 erstreckt sich weiterhin über die dem zweiten Hüllenteil 28 zugewandte Seite des Flanschbereichs 46, so dass im Montagezustand, in dem das zweite Hüllenteil 28 auf dem Isolator 42 im Flanschbereich 46 angeordnet, insbesondere mit diesem gefügt ist, das erste und das zweite Hüllenteil 26, 28 elektrisch mittels des Isolator 42 voneinander getrennt, also elektrisch zueinander isoliert, sind.

Der Isolator 42 ist anhand mehrerer Schichten aus einem Kunststoff wie beispielsweise Polyamid (PA), Polypropylen (PP) oder Polyethylen (PE) gebildet. Der Boden 36 sowie der Deckel 44 weisen eine rechteckige Grundform auf.

Die Batteriezelle 14 ist im Wesentlichen quaderförmig ausgebildet. Dabei ist eine Ausdehnung des Boden 36 bzw. des Deckels 44 in einer als Zell-Längsrichtung bezeichneten Richtung größer als in einer zur Längsrichtung quer verlaufenden Zell-Breitenrichtung. Die Zell-Längsrichtung und die Zell-Breitenrichtung bilden dabei die Haupterstreckungsrichtungen des Bodens 36 bzw. des Deckels 44 und auch der Batteriezelle 14 insgesamt. Die Zell-Längsrichtung und die Zell-Breitenrichtung verlaufen als in einer vom Boden 36 bzw. vom Deckel 44 aufgespannten Ebene. Der Boden 36 und der Deckel 44 sind parallel zueinander orientiert.

Im nebenstehenden Richtungsdiagramm ist die Zell-Längsrichtung mit dem Bezugszeichen L_{Z} und die Breitenrichtung mit dem Bezugszeichen B_{Z} versehen.

Der Isolator 42 weist dabei eine Aussparung 48 im Bereich des Bodens 36 sowie eine Aussparung 48 im Bereich des Deckels 44 auf. Die Aussparungen 48 erstrecken sich dabei entlang des gesamten Bodens in der Zell-Längsrichtung des Bodens 36 bzw. des Deckels 44.

In der Aussparung 48 des Isolators 42 im Bereich des Bodens 36 ist ein (erstes) Leiterelement 50 aufgenommen und mit dem ersten Hüllenteil 26 elektrisch und mechanisch kontaktiert. Also ist das Leiterelement 50 an der der Elektrodenanordnung 30 zugewandten Innenseite 40 des ersten Hüllenteils 26 angeordnet. Das erste Leiterelement 50 ist hierbei als eine Stromsammelschiene aus Kupfer gebildet und mit einer Nickel-Beschichtung versehen.

In der Aussparung 48 des Isolators 42 im Bereich des Deckels 44 ist ein weiteres (zweites) Leiterelement 52 aufgenommen und mit dem zweiten Hüllenteil 28 elektrisch und mechanisch kontaktiert. Also ist das zweite Leiterelement 52 an der der Elektrodenanordnung 30 zugewandten Innenseite 40 des zweiten Hüllenteils 28 angeordnet. Das zweite Leiterelement 52 ist hierbei als eine Stromsammelschiene aus Aluminium gebildet. Gemäß einer nicht weiter dargestellten Alternative der Batteriezelle weist diese kein zweites Leiterelement 50 auf. In diesem Fall ist dennoch die Aussparung 48 für die Kontaktierung der Kathoden 34 mit dem zweiten Hüllenteil 28 eingerichtet (vgl. auch weiter unten).

Das erste Hüllenteile 26, insbesondere dessen Boden 36, bildet eine Anlagefläche für das zweite Hüllenteil 28 einer benachbarten Batteriezelle 14 oder für eine der Kühlplatten 16. Das zweite Hüllenteil 28, insbesondere dessen Deckel 44, bilden also eine Anlagefläche für das erste Hüllenteil 28 einer benachbarten Batteriezelle 14 oder für eine der Kühlplatten 16.

Die Hülle 24, also das erste Hüllenteil 26 und das zweite Hüllenteil 28 sind aus Aluminium gebildet und weist eine Dicke, also eine Wandstärke, zwischen 10 µm und 2 mm auf. Die beiden Hüllenteile 26 und 28 sind außenseitig, also an dessen der Elektrodenanordnung 30 abgewandten Außenseite 53, zum Schutz gegen die Bildung einer vergleichsweise hochohmige Oxidschicht mit einer elektrisch leitfähigen Antioxidationsbeschichtung versehen.

Wie Weiterhin in der Fig. 3 erkennbar ist, ist die Elektrodenanordnung 30 als ein Elektrodenstapel mit mehreren Anoden 32 und mehreren Kathoden 34 ausgebildet. Die Anoden 32 und die Kathoden 34 sind dabei alternierend in einer Elektroden-Stapelrichtung S_{EL} übereinander gestapelt. Beispielhaft sind zum Zwecke einer besseren Übersichtlichkeit lediglich drei Anoden 32 und drei Kathoden 34 dargestellt. Zwischen den Anoden 32 und den Kathoden 34 ist dabei jeweils ein Separator 35 angeordnet, welche in der Fig.3 zum Zweck einer besseren Übersichtlichkeit nicht gezeigt sind.

In der Fig. 6 sind dabei eine der Anoden 32, eine der Kathoden 34 und einer der Separatoren 35 im ausgebreiteten, als eben ausgelegten (Vormontage-) Zustand dargestellt. Die Separatoren 35 ragen dabei in Längsrichtung L über die Anoden 32 und die Kathoden 34 hinaus. Zusätzlich oder alternativ hierzu ragen die Anoden 32 gemäß einer nicht weiter dargestellten Variante zwischen 0,2 mm und 1,5 mm, insbesondere zwischen 0,5 mm und 1,5 mm über die Kathoden 34, insbesondere beidseitig in Längsrichtung L, hinaus.

Jede der Anoden 32 und jede der Kathoden 34 weist eine rechteckige Grundfläche auf. Jede der Anoden 32 und jede der Kathoden 34 weist also zwei zueinander parallel verlaufende Längs-Kanten 54 und zwei zu diesen quer verlaufende Breiten-Kanten 56. Die Längs-Kante erstreckt sich entlang einer Längsrichtung L und die Breitenkante entlang einer Breitenrichtung B, wobei die Längsrichtung L parallel zur Zell-Längsrichtung L_{Z} und die Breitenrichtung B parallel zur Zell-Breitenrichtung 14 orientiert ist. Dabei bilden die Längsrichtung L und die Breitenrichtung B die Haupterstreckungsrichtungen der jeweiligen Anode 32 oder der jeweiligen Kathode 34.

Jede der Anoden 32 weist ein aus einer Kupferfolie gebildetes Substrat 58 auf. In Breitenrichtung weist jede der Anoden 32 drei Abschnitte auf. Endseitig in Breitenrichtung B ist das Substrat 58 unter Bildung des ersten Abschnitts 60 mit einem Aktivmaterial 62 beschichtet, wobei sich der erste Abschnitt 60 vollständig entlang einer der beiden Längs-Kanten 54 der jeweiligen Anode 32, insbesondere dessen Substrats 58, erstreckt. Zudem weist jede der Anoden 32 endseitig hinsichtlich der Breitenrichtung B einen Anoden-Kontaktabschnitt 64 auf, welcher sich vollständig entlang der anderen der beiden Längs-Kanten 54 der Anode 32 erstreckt. Dabei ist der Anoden-Kontaktabschnitt 64 anhand eines nicht beschichteten Abschnitts des Substrats 58 gebildet. In Breitenrichtung B zwischen dem mit Aktivmaterial beschichteten ersten Abschnitt 60 und dem Anoden-Kontaktabschnitt 64 weist jede der Anoden 32 einen Isolationsabschnitt 66 auf. Dieser ist anhand des Substrats 58 gebildet, wobei das Substrat 58 in diesem Abschnitt 66 mit einer elektrisch isolierenden Beschichtung versehen ist.

Jede der Kathoden 34 weist ein aus einer Aluminiumfolie gebildetes Substrat 68 auf. In Breitenrichtung weist jede der Kathoden 34 ebenfalls die drei Abschnitte auf. Also ist das Substrat 68 endseitig in Breitenrichtung B unter Bildung des ersten Abschnitts 60 mit einem Aktivmaterial beschichtet, wobei sich der erste Abschnitt 60 vollständig entlang einer der beiden Längs-Kanten 54 der jeweiligen Kathode 34, insbesondere dessen Substrats 68, erstreckt. Zudem weist jede der Kathoden 34 endseitig hinsichtlich der Breitenrichtung B einen Kathoden-Kontaktabschnitt 64 auf, welcher sich vollständig entlang der anderen der beiden Längs-Kanten 54 der Kathoden 34 erstreckt. Dabei ist der Kathoden-Kontaktabschnitt 70 anhand eines nicht beschichteten Abschnitts des Substrats 68 gebildet. In Breitenrichtung B zwischen dem mit Aktivmaterial beschichteten ersten Abschnitt 60 und dem Kathoden-Kontaktabschnitt 70 weist jede der Kathoden 34 einen Isolationsabschnitt 66 auf. Dieser ist anhand des Substrats 68 gebildet, wobei das Substrat 68 in diesem Abschnitt 66 mit einer elektrisch isolierenden Beschichtung versehen ist.

Der Isolationsabschnitt 66 verhindert dabei einen Kurzschluss zwischen einer der Anoden 32 und einer der Kathoden 34 in einem Bereich, in welchem der jeweilige Kontaktabschnitt 64 oder 70 gebogen und in der Nähe einer der Längs-Kanten des ersten Abschnitts 60 der Kathode 34 bzw. der Anoden 32 angeordnet ist.

Bei jeder der Anoden 32 und bei jeder der Kathoden 34 ist die Länge deren Längs-Kante 54 größer ist als die Länge der Breiten-Kante 56, hier ungefähr das Fünffache der Länge der Breiten-Kante 56 beträgt.

Bei der Bildung der Elektrodenanordnung 30 sind die Anoden 32 und die Kathoden 34 dabei derart orientiert, dass die Anoden-Kontaktabschnitte 64 und die Kathoden-Kontaktabschnitte 70 parallel zueinander verlaufen, jedoch auf einander gegenüberliegenden Seiten der Elektrodenanordnung 30 angeordnet sind.

Wie in den Figuren 3 und 4 erkennbar ist, sind im Montagezustand der Batteriezelle 14 gemäß der ersten Variante die Anoden-Kontaktabschnitte 64 zu einer ersten Grundseite, also einer Oberseite 72 des Elektrodenstapels hin umgebogen. Zudem sind die Kathoden-Kontaktabschnitte 70 zu einer zweiten Grundseite, also einer Unterseite 74 des Elektrodenstapels hin umgebogen. Dabei ist eine Biegung um eine Achse erfolgt, welche parallel zur jeweiligen Längs-Kante 54 orientiert ist. Somit sind die Anoden-Kontaktabschnitte 64 in Elektrodenstapelrichtung S_{EL} abschnittsweise unter den beschichteten Abschnitten 60 der Anoden 32 und der Kathoden 34 angeordnet. Des Weiteren sind die Kathoden-Kontaktabschnitte 70 in Elektrodenstapelrichtung S_{EL} abschnittsweise über den beschichteten Abschnitten 60 der Anoden 32 und der Kathoden 34 angeordnet.

Die Anoden 32 sind anhand deren Anoden-Kontaktabschnitt 64 mit dem Leiterelement 50 elektrisch verbunden. Somit sind die die Anoden 32 anhand deren Anoden-Kontaktabschnitt 64 mittels des Leiterelements 50 mit dem ersten Hüllenteil 26 elektrisch verbunden. In analoger Weise sind die Kathoden 34 anhand deren Kathoden-Kontaktabschnitt 64 mit zweiten Leiterelement 52 elektrisch verbunden. Somit sind die Kathoden 34 anhand deren Kathoden-Kontaktabschnitt 70 und mittels des zweiten Leiterelements 52 mit dem zweiten Hüllenteil 28 elektrisch verbunden. Gemäß einer nicht dargestellten Variante der Batteriezelle 14, bei welcher diese kein zweites Leiterelement 52 aufweist, sind die Kathoden 34 anhand deren Kathoden-Kontaktabschnitt 70 direkt mit dem zweiten Hüllenteil 28 elektrisch verbunden.

Zwischen den umgebogenen Anoden-Kontaktabschnitten 64 und der Oberseite 72 der Elektrodenanordnung 30 sowie zwischen den umgebogenen Kathoden-Kontaktabschnitten 70 und der Unterseite 74 der Elektrodenanordnung 30 ist jeweils ein Isolatorelement 76 angeordnet. Also ist im Bereich der Kontaktstelle der Anoden-Kontaktabschnitte 64 mit dem Leiterelement 50 (und somit mittelbar mit dem ersten Hüllenteil 26) eines der Isolatorelemente 76 am Elektrodenstapel 30 angeordnet. Zudem ist im Bereich der Kontaktstelle der Kathoden-Kontaktabschnitte 70 mit dem weiteren Leiterelement 52 (und somit mittelbar mit dem zweiten Hüllenteil 28) das andere der Isolatorelemente 76 am Elektrodenstapel 30 angeordnet. Gemäß einer nicht dargestellten Variante der Batteriezelle 14, bei welcher diese kein zweites Leiterelement 52 aufweist, ist das andere der Isolatorelemente 76 am Elektrodenstapel 30 im Bereich der Kontaktstelle der Kathoden-Kontaktabschnitte 70 mit dem zweiten Hüllenteil 28 angeordnet. Beispielsweise sind die beiden Isolatorelemente 76 mit dem Elektrodenstapel gefügt, insbesondere angeklebt.

Mittels der Isolatorelemente 76 ist vorteilhaft ein Kurzschluss zwischen den Anoden 32 und den Kathoden 34 sowie ein Li-Plating (Lithium-Plating) vermieden.

Beispielsweise sind die Anoden-Kontaktabschnitte 64 miteinander und/oder mit dem Leiterelement 50 gefügt, insbesondere anhand eines Schweißprozesses. In analoger Weise sind die Kathoden-Kontaktabschnitte 70 miteinander und/oder mit dem zweiten Leiterelement 52, insbesondere anhand eines Schweißprozesses, gefügt.

Gemäß der Ausgestaltung der Figuren 3 und 4 jedoch sind die Anoden-Kontaktabschnitte 64 miteinander und mit dem Leiterelement 50 sowie die Kathoden-Kontaktanschlüsse 70 miteinander sowie mit dem zweiten Leiterelement 52 kraftschlüssig gefügt. Hierzu sind die Anoden-Kontaktabschnitte 64 zwischen dem Leiterelement 50 und dem Isolatorelement 76 bzw. dem Elektrodenstapel geklemmt. Zudem sind die Kathoden-Kontaktabschnitte 70 zwischen dem zweiten Leiterelement 52 und dem anderen Isolatorelement 76 bzw. dem Elektrodenstapel geklemmt. Hierbei herrscht vorzugsweise reduzierte Atmosphäre in der Batteriezelle 14. Gemäß einer nicht dargestellten Variante der Batteriezelle 14, bei welcher diese kein zweites Leiterelement 52 aufweist, erfolgt die Klemmung der Kathoden-Kontaktabschnitte 70 zwischen dem zweiten Hüllenteil 28 und dem Isolatorelement 76 oder dem Elektrodenstapel.

Dabei ist die Dicke d_{I} des Isolators 42, also dessen Ausdehnung vom jeweiligen Hüllenteil 26 oder 28 zur Elektrodenanordnung 30 hin, gleich der Summe aus der Dicke d_{An} der Anoden-Kontaktabschnitte 64, der Dicke d_{L} des Leiterelements 50 und der Dicke d_{E} des Isolatorelements 76. Auf diese Weise ist im Bereich des Leiterelements 50 bzw. des zweiten Leiterelements 52 und des dieses umfassenden Isolators 42 eine im Wesentlichen gleiche Dicke der Batteriezelle 14 realisiert. Folglich ist ein auf die Batteriezelle 14 einwirkender Druck gleichmäßig auf die Elektrodenanordnung 30 verteilt.

Die Schnittebene der Figuren 4 und 5 ist dabei senkrecht zur Längsrichtung L.

In der Fig. 5 ist eine zweite Variante der Batteriezelle 14 dargestellt. Mit Ausnahme des Folgenden geltend die oben gemachten Ausführungen in analoger Weise.

Hierbei sind die Anoden-Kontaktabschnitte 64 mit einer der Stirnseiten 38 des ersten Hüllenteils 26 und die Kathoden-Kontaktabschnitte 70 mit einer der Stirnseiten 38 des zweiten Hüllenteils 28 mittels des Leiterelements 50 oder der zweiten Leiterelements 52 elektrisch verbunden. Beispielweise werden die Anoden-Kontaktabschnitte 64 und die Kathoden-Kontaktabschnitte 70 mit dem Leiterelement 50 bzw. mit dem zweiten Leiterelement 52 durch einen Schweißprozess gefügt. Alternativ oder zusätzlich erfolgt die Fügung durch Klemmung der der Anoden-Kontaktabschnitte 64 und die Kathoden-Kontaktabschnitte 70.

Bei der zweiten Variante der Batteriezelle 14 ist ein Raumbedarf in Zell-Breitenrichtung 14 erhöht, dafür ist ein Umbiegen der der Anoden-Kontaktabschnitte 64 und der Kathoden-Kontaktabschnitte 70 zur Oberseite bzw. zur Unterseite hin nicht notwendig. Zudem ist eine Schwankung der Dicke der Batteriezelle 14 aufgrund des Leiterelements und der damit kontaktierten Kontaktabschnitte 64, 70 vermieden.

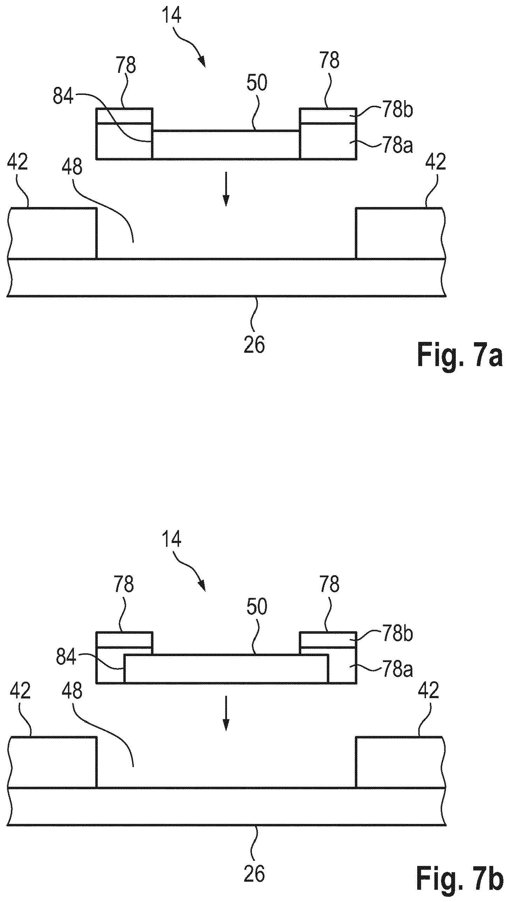

In den Figuren 7a bis 7i sind unterschiedliche Varianten des Leiterelements 52 im Querschnitt dargestellt. Dieses ist umfangsseitig, also entlang dessen Umfangs mit einem Vorsiegelband 78 gefügt. Im Zuge der Herstellung der Batteriezelle 14 wird das mit dem Vorsiegelband 78 gefügte Leiterelement 50 in die Aussparung 40 eingebracht, was in den Figuren 7a bis 7i durch einen Pfeil repräsentiert ist. Anschließend wird das Leiterelement 50 durch Fügen, insbesondere durch Pressen und/oder Erhitzen, des Vorsiegelbands 78 mit dem Isolator 42 eingesiegelt. Also ist das Leiterelement 50 fluiddicht anhand des Vorsiegelbandes 78 mit dem Isolator 42 gefügt.

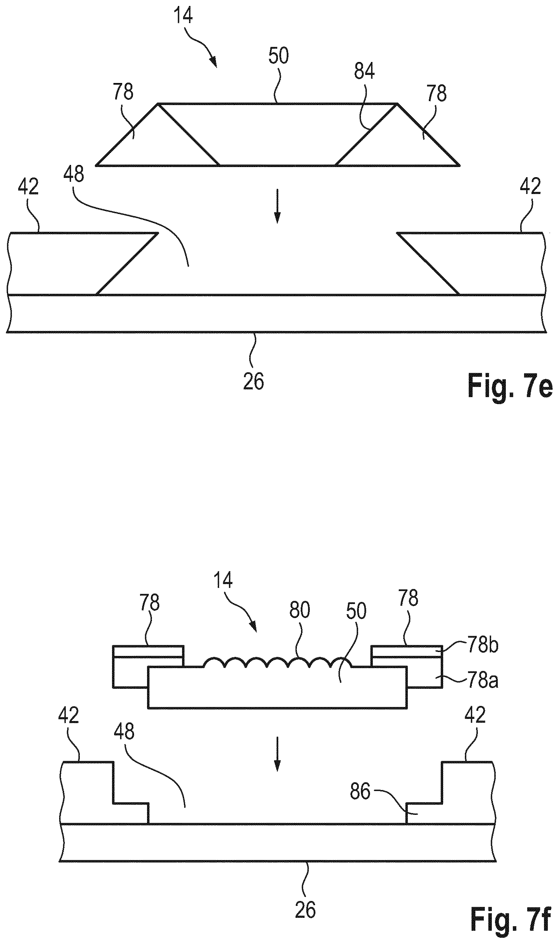

Das Vorsiegelband 78 weist hierzu, vgl. insbesondere Figuren 7a bis 7c und 7f bis 7i, zwei Schichten 78a und 78b auf. Hierbei ist die erste Schicht 78a dem ersten Hüllenteil 26 zugewandt und dient dem Fügen mit dem Isolator 42. Die zweite Schicht 78b ist auf der der Elektrodenanordnung 20 zugewandten Seite, mit anderen Worten Batteriezelleninnenseitig, angeordnet. Dabei weist die zweite Schicht 78b eine höhere Schmelztemperatur auf als die erste Schicht 78a. Beispielsweise beträgt die Schmelztemperatur der ersten Schicht 78a zwischen 60°C und 100°C. Die Schmelztemperatur der zweiten Schicht 78b beträgt beispielsweise 180°C. Insbesondere wird im Zuge des Siegelns das Vorsiegelband 78 erhitzt, wobei lediglich die ersten Schicht 78a zumindest teilweise aufschmilzt, während die zweite Schicht 78b aufgrund deren höheren Schmelztemperatur fest bleibt.

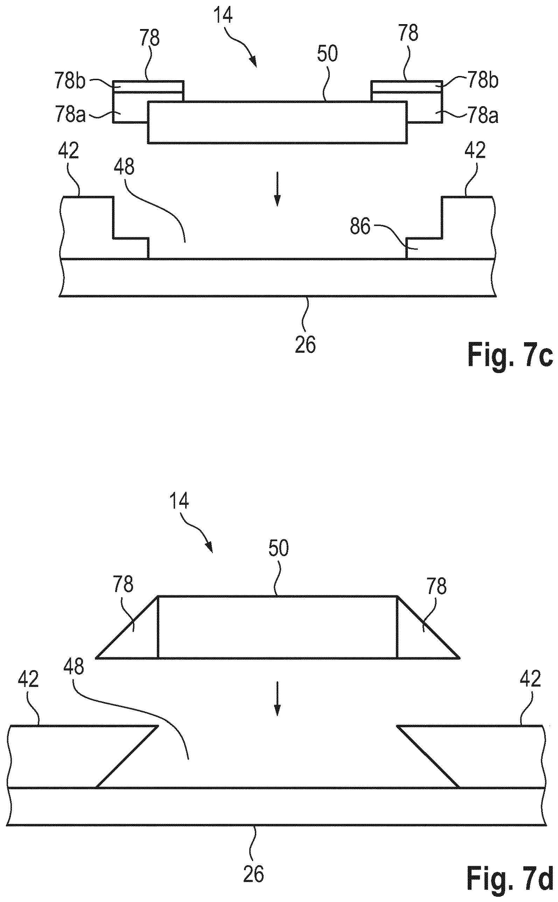

Das Vorsiegelband 78 ist an den Stirnseiten 84 des Leiterelements 50, also an dessen senkrecht zum ersten Hüllenteil 26 orientierten Seiten, angeordnet. Hierbei weist der Isolator 42 eine Kontur auf, die zur Kontur des mit dem Vorsiegelbandes 78 korrespondiert. So weist gemäß der Fig. 7a der an der jeweiligen Stirnseite des Leiterelements 50 angeordnete Abschnitt des Vorsiegelbands einen quaderförmigen Querschnitt auf. Ein solches Vorsiegelband 78 ist vergleichsweise einfach und kostengünstig herzustellen. Gemäß der Ausgestaltung der Fig. 7b ist der an der jeweiligen Stirnseite 84 des Leiterelements 50 angeordnete Abschnitt des Vorsiegelbands einen L-förmigen Querschnitt mit einem Horizontal-Schenkel und einem Vertikalschenkel auf. Der Horizontalschenkel ist dabei an der Stirnseite des Leiterelements 50 angeordnet, wobei der Vertikalschenkel auf der der Elektrodenanordnung 30 zugwandten Seite des Leiterelements angeordnet ist. Gemäß dieser Variante ist eine Fügefläche zwischen den Vorsiegelband 78 und dem Leiterelement vorteilhaft erhöht, jedoch sind ebenfalls die Produktionskosten erhöht. Gemäß der Ausgestaltung der Fig. 7c erstreckt sich der Horizontalschenkel nicht entlang der gesamten Dicke des Leiterelements 50. Der Isolator 42 weist dabei eine Auflageschulter 86 für den Horizontalschenkel auf. Bei dieser Ausgestaltung ist ein Fügefläche zwischen dem Vorsiegelband 78 und dem Isolator 42 vorteilhaft erhöht. Gemäß der Ausgestaltung der Fig. 7d weist der an der jeweiligen Stirnseite 84 des Leiterelements 50 angeordnete Abschnitt des Vorsiegelbands 78 einen dreieckigen Querschnitt auf. Die die Aussparung 48 begrenzende Wand des Isolators ist dabei entsprechend der Form des Vorsiegelbands 78 geneigt, so dass diese Wand einen Überhang aufweist. So ist diese Wand gegen eine Normale des ersten Gehäuseteils 26 geneigt. Nach dem einbringen des Leiterelements 50 mit dem Vorsiegelband 78 in die Aussparung 48 überdeckt also der Isolator 42 das Vorsiegelband, so dass eine vergleichsweise zuverlässige Fügung realisiert ist. Gemäß der Ausgestaltung der Fig. 7e ist zusätzlich zur Ausgestaltung der Fig. 7d der Querschnitt des Leiterelements 50 trapezförmig. So ist die Stirnseite 84 des Leiterelements gegen eine Normale des ersten Gehäuseteils 26 geneigt. Auf diese Weise ist ebenfalls eine Kontaktfläche zwischen dem Leiterelement 50 und dem Vorsiegelband 78 erhöht.

Weiterhin ist die Dicke d_{I} des Isolators 42 dabei gleich der Dicke des mit dem Vorsiegelband 78 gefügten Leiterelements 50.

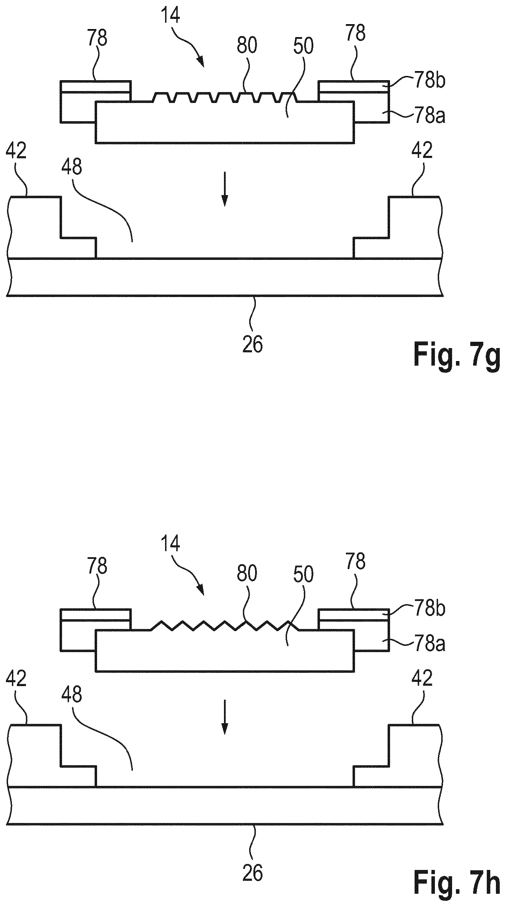

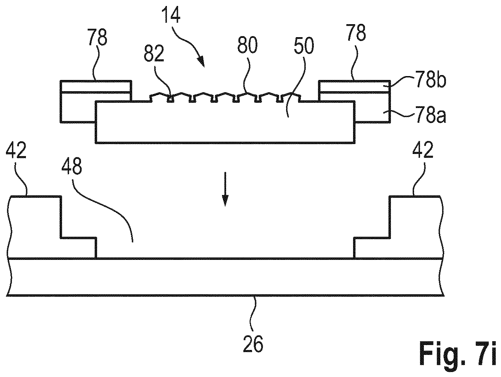

Weiterhin weist das Leiterelement 50 an dessen der Elektrodenanordnung 30 zugewandten Seite emporstehende Fortsätze 80 auf. Beispielsweise sind die Fortsätze 80 halbkugelförmig (Fig. 7f) , pyramidenförmig (Fig. 7h) oder pyramidenstumpfförmig (Fig. 7g). Bei der Ausgestaltung gemäß der Fig. 7i sind die Fortsätze 80 kegelförmig ausgebildet, wobei an deren leiterelementseitigen Ende jeweils ein Hinterschnitt 82 gebildet ist. Anhand der Fortsätze 80 ist eine Oberflächenstruktur gebildet, anhand welcher zum einen eine Kontaktfläche mit dem Anoden-Kontaktabschnitten 64 vergrößert ist. Zum anderen ist bei einem Eingreifen der Anoden-Kontaktabschnitte 64 zwischen die Fortsätze 80 ein Formschluss in einer Richtung parallel zur Oberfläche des Leiterelements 50 gebildet.

In analoger weise gelten die Ausführung zu den Figuren 7a bis 7f für das zweite Leiterelement 52.

Zusammenfassend weist der Isolator 42 jeweils eine Aussparung 48 für das Leiterelement 50 und für das zweite Leiterelement 52 auf, wobei das Leiterelement 50 und das zweite Leiterelement 52 in der jeweiligen Aussparung 48 aufgenommen und umfangsseitig mit dem Isolator 42 anhand des Vorsiegelbandes 78 fluiddicht gefügt ist.

Die Batteriezelle 14 weist aufgrund der Integration der Batteriepole in die Hüllenteile 26 und 28, aufgrund der Ausdehnung der Anoden- und der Kathoden-Kontaktabschnitte 63, 70 entlang der gesamten Längs-Kante erstreckt sowie aufgrund der im Vergleich zur Breiten-Kante 56 längeren Längs-Kante 54 vorteilhafterweise einen vergleichsweise geringen elektrischen Widerstand auf.

Die Erfindung ist nicht auf die vorstehend beschriebenen Ausführungsbeispiele beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

So weist eine, insbesondere für eine Traktionsbatterie 4 eines Kraftfahrzeugs 2 vorgesehene und eingerichtete, Batteriezelle 14 eine, beispielsweise als Flachwickel oder insbesondere als Elektrodenstapel ausgebildete, Elektrodenanordnung 30 mit mindestens einer Anode 32 und mit mindestens einer Kathode 34. Dabei weist jede der Anoden 32 einen sich vollständig entlang einer deren Längs-Kanten 54 erstreckenden Anoden-Kontaktabschnitt 64 auf. Zudem weist jede der Kathoden 34 einen sich vollständig entlang einer deren Längs-Kanten 54 erstreckenden Kathoden-Kontaktabschnitt 64 auf. Die Batteriezelle umfasst des Weiteren eine Hülle 24 in welcher die Elektrodenanordnung 30 aufgenommen ist.

Die Anoden-Kontaktabschnitte 64 sind oder der Anoden-Kontaktabschnitt 64 ist durch die Hülle 24 nach (Batteriezellen-)außen geführt. Beispielsweise kann auf diese Weise der Anoden-Kontaktabschnitt 64 bzw. können die Anoden-Kontaktabschnitte 64 außen mit einer Stromschiene kontaktiert werden. Alternativ hierzu sind die Anoden-Kontaktabschnitte 64 oder der Anoden-Kontaktabschnitt 64 Batteriezelleninnen, also in einem von der Hülle umfassten Raum, mit einem Terminal (tab) kontaktiert, der durch die Hülle 24 nach (Batteriezellen-)außen geführt ist.

Zusätzlich oder alternativ hierzu sind die Kathoden-Kontaktabschnitte 70 oder ist der Kathoden -Kontaktabschnitt 70 ist durch die Hülle 24 nach (Batteriezellen-)außen geführt. Beispielsweise kann auf diese Weise der Kathoden-Kontaktabschnitt 70 bzw. können die Kathoden-Kontaktabschnitte 70 außen mit einer Stromschiene kontaktiert werden. Alternativ hierzu sind die Kathoden-Kontaktabschnitte 70 oder der Kathoden-Kontaktabschnitt 70 Batteriezelleninnen, also in einem von der Hülle 24 umfassten Raum, mit einem Terminal (tab) kontaktiert, der durch die Hülle 24 nach (Batteriezellen-)außen geführt ist.

### Bezugszeichenliste

- 2: elektrisch angetriebenes Kraftfahrzeug
- 4: Traktionsbatterie
- 6: Batteriemodul
- 8: Batterieanschluss
- 10: Wechselrichter
- 12: Elektromotor
- 14: Batteriezelle
- 16: Kühlplatte
- 18: Kanal für ein Kühlmedium
- 20: Federelement
- 22: Modulgehäuse
- 24: Hülle
- 26: erstes Hüllenteil
- 28: zweites Hüllenteil
- 30: Elektrodenanordnung
- 32: Anode
- 34: Kathode
- 35: Separator
- 36: Boden
- 38: Stirnseite
- 40: Innenseite
- 42: Isolator
- 44: Deckel
- 46: Flanschbereich
- 48: Aussparung
- 50: Leiterelement
- 52: zweites Leiterelement
- 53: Außenseite
- 54: Längs-Kante
- 56: Breiten-Kante
- 58: Substrat einer Anode
- 60: beschichteter Abschnitt
- 62: Aktivmaterial
- 64: Anoden-Kontaktabschnitt
- 66: Isolationsabschnitt
- 68: Substrat einer Kathode
- 70: Kathoden-Kontaktabschnitt
- 72: Oberseite der Elektrodenanordnung
- 74: Unterseite der Elektrodenanordnung
- 76: Isolatorelement
- 78: Vorsiegelband
- 78a: Schicht des Vorsiegelbands
- 78b: Schicht des Vorsiegelbands
- 80: Fortsatz
- 82: Hinterschnitt
- 84: Stirnseite
- 86: Auflageschulter

- d_{An}: Dicke der Anoden-Kontaktabschnitte
- d_{E}: Dicke des Isolatorelements
- d_{I}: Dicke des Isolators
- d_{L}: Dicke des Leiterelements

- B: Breitenrichtung
- B_{Z}: Zell-Breitenrichtung
- L: Längsrichtung
- L_{Z}: Zell-Längsrichtung
- S_{BZ}: Zellen-Stapelrichtung
- S_{EL}: Elektroden-Stapelrichtung

## Patentansprüche

1. Batteriezelle (14), insbesondere für eine Traktionsbatterie (4) eines Kraftfahrzeugs (2), aufweisend,
- eine Elektrodenanordnung (30) mit mindestens einer Anode (32) und mit mindestens einer Kathode (34),
- wobei jede der Anoden (32) einen sich vollständig entlang einer deren Längs-Kanten (54) erstreckenden Anoden-Kontaktabschnitt (64) aufweist,
wobei jede der Kathoden (34) einen sich vollständig entlang einer deren Längs-Kanten (54) erstreckenden Kathoden-Kontaktabschnitt (64) aufweist,
- eine Hülle (24) aus einem ersten Hüllenteil (26) und aus einem zum ersten Hüllenteil (26) elektrisch isolierten zweiten Hüllenteil (28), in welcher die Elektrodenanordnung (30) aufgenommen ist,
- wobei jede der Anoden (32) mittels deren Anoden-Kontaktabschnitt (64) mit dem ersten Hüllenteil (26) und jede der Kathoden (34) mittels deren Kathoden-Kontaktabschnitt (70) mit dem zweiten Hüllenteil (28) elektrisch verbunden ist.

2. Batteriezelle (14) nach Anspruch 1,
**dadurch gekennzeichnet,**
**dass** an einer der Elektrodenanordnung (30) zugewandten Innenseite (40) des ersten Hüllenteils (26) ein Leiterelement (50) angeordnet ist, wobei jeder Anoden-Kontaktabschnitt (64) mit dem Leiterelement (50) elektrisch verbunden ist.

3. Batteriezelle (14) nach Anspruch 1 oder 2,
**dadurch gekennzeichnet,**
**dass** bei jeder der Anoden (32) und/oder bei jeder der Kathoden (34) die Länge der Längs-Kante (54), größer ist als die Länge der Breiten-Kante (56), insbesondere mindestens das Doppelte, vorzugsweise mindestens das Dreifache, der Länge der Breiten-Kante (56) beträgt.

4. Batteriezelle (14) nach Anspruch 2 oder 3,
**dadurch gekennzeichnet,**
**dass** das Leiterelement (50) mit einer Nickel-Beschichtung versehen ist.

5. Batteriezelle (14) nach einem der Ansprüche 1 bis 4,
**dadurch gekennzeichnet,**
**dass** anhand des ersten Hüllenteils (26) und anhand des zweiten Hüllenteils (28) jeweils eine Anlagefläche für ein zweites Hüllenelement (28) oder für ein erstes Hüllenelement (26) einer weiteren Batteriezelle (14) bildet.

6. Batteriezelle (14) nach einem der Ansprüche 1 bis 5,
**dadurch gekennzeichnet,**
**dass** das erste Hüllenelement (26) und/oder das zweite Hüllenelement (28) jeweils an dessen Innenseite (40) mit einem Isolator (42) versehen ist.

7. Batteriezelle (14) nach Anspruch 2 und nach Anspruch 6,
**dadurch gekennzeichnet,**
**dass** der Isolator (42) eine Aussparung (48) für das Leiterelement (50) aufweist, wobei das Leiterelement (50) in der Aussparung (48) aufgenommen und umfangsseitig mit dem Isolator (42) fluiddicht gefügt ist.

8. Batteriezelle nach Anspruch 2 sowie nach Anspruch 6 oder 7,
**dadurch gekennzeichnet,**
**dass** zum fluiddichten Fügen des Leiterelements (50) mit dem Isolator (42) das Leiterelement (50) umfangsseitig mit einem Vorsiegelband (78) gefügt ist,
- wobei der Isolator (42) eine Kontur aufweist, die zur Kontur des mit dem Vorsiegelband gefügten Leiterelements (50) korrespondiert, und/oder
- wobei die Dicke des Isolators (42) gleich der Dicke des mit dem Vorsiegelband gefügten Leiterelements (50) ist.

9. Batteriezelle (14) nach einem der Ansprüche 2 bis 8,
**dadurch gekennzeichnet,**
**dass** das Leiterelement (50) an dessen der Elektrodenanordnung (30) zugewandten Seite emporstehende Fortsätze (80) oder Vertiefungen aufweist.

10. Batteriezelle (14) nach einem der Ansprüche 1 bis 9,
**dadurch gekennzeichnet,**
**dass** das erste Hüllenteil (26) und das zweite Hüllenteil (28) aus demselben Material, insbesondere aus Aluminium oder aus einem Edelstahl gebildet sind.

11. Batteriezelle (14) nach einem der Ansprüche 1 bis 10,
**dadurch gekennzeichnet,**
**dass** jeder der Anoden-Kontaktabschnitte (64) um eine zu deren Längs-Kante (54) parallelen Längsrichtung (L) zu einer Oberseite (72) der Elektrodenanordnung (30) gebogen sind, welche dem ersten Hüllenteil (26) zugewandt ist, und dass jeder der Kathoden-Kontaktabschnitte (70) um eine zur deren Längs-Kante (54) parallelen Längsrichtung (L) zu einer Unterseite (74) der Elektrodenanordnung (30) gebogen sind, welche dem zweiten Hüllenteil (26) zugewandt ist.

12. Batteriezelle (14) nach einem der Ansprüche 1 bis 10,
**dadurch gekennzeichnet,**
**dass** jeder der Anoden-Kontaktabschnitte (64) mit einer Stirnseite (38) des ersten Hüllenteils (26) und jeder der Kathoden-Kontaktabschnitte (70) mit einer Stirnseite (38) des zweiten Hüllenteils (28) elektrisch verbunden.

13. Batteriezelle (14) nach einem der Ansprüche 1 bis 12,
**dadurch gekennzeichnet,**
**dass** im Bereich der Kontaktstelle der Anoden-Kontaktabschnitte (64) mit dem ersten Hüllenteil (26) oder mit dem Leiterelement (50) und/oder im Bereich der Kontaktstelle der Kathoden-Kontaktabschnitte (70) mit dem zweiten Hüllenteil (28) oder mit einem weiteren Leiterelement (52) jeweils ein Isolatorelement (76) an der Elektrodenanordnung (30) angeordnet ist.

14. Batteriezelle (14) nach einem der Ansprüche 1 bis 13,
**dadurch gekennzeichnet,**
- **dass** bei jeder der Anoden (32) zwischen deren Anoden-Kontaktabschnitt (64) und deren mit Aktivmaterial (62) versehenen Abschnitt (60) ein mit einem elektrisch isolierenden Material versehenen Isolationsabschnitt (66) angeordnet ist, und/oder
- **dass** bei jeder der Kathoden (34) zwischen dessen Kathoden-Kontaktabschnitt (70) und einem mit Aktivmaterial (62) versehenen Abschnitt (60) ein mit einem elektrisch isolierenden Material versehenen Isolationsabschnitt (66) angeordnet ist.

15. Batteriezelle (14) nach Anspruch 2,
**dadurch gekennzeichnet,**
**dass** die Anoden-Kontaktabschnitte (64) mit dem Leiterelement (50) oder mit dem ersten Hüllenteil (26) kraftschlüssig gefügt sind, und/oder dass die Kathoden-Kontaktabschnitte (70) mit einem weiteren Leiterelement (52) oder mit dem zweiten Hüllenteil (26) kraftschlüssig gefügt sind.

16. Batteriezelle (14) nach einem der vorangehenden Ansprüche,
**dadurch gekennzeichnet,**
**dass** die Dicke (d_{I}) des Isolators (42) gleich der Summe aus der Dicke (d_{An}) der Anoden-Kontaktabschnitte (64), der Dicke (d_{L}) des Leiterelements (50) und der Dicke (d_{E}) des Isolatorelements (76) ist.

17. Batteriemodul (6) für eine Traktionsbatterie (4), mit einer Anzahl an Batteriezellen (14) nach einem der Ansprüche 1 bis 16,
wobei die Batteriezellen (14) hinsichtlich einer Stapelrichtung (S) nebeneinander angeordnet sind, und wobei das erste Hüllenteil (26) einer der Batteriezellen (14) elektrisch mit dem zweiten Hüllenteil (28) der in Zellen-Stapelrichtung (S_{BZ}) nächsten Batteriezelle (14) verbunden ist.

18. Batteriemodul (6) nach Anspruch 17,
**dadurch gekennzeichnet,**
**dass** zwischen zwei der Batteriezellen (14) eine elektrisch leitende Kühlplatte (16) angeordnet ist.

19. Elektrisch angetriebenes Kraftfahrzeug (2) mit einer Traktionsbatterie (4), wobei die Traktionsbatterie mindestens ein Batteriemodul (6) nach Anspruch 17 oder 18 und/oder mindestens eine Batteriezelle (14) nach einem der Ansprüche 1 bis 16 aufweist.

## Claims

1. Battery cell (14), in particular for a traction battery (4) of a motor vehicle (2), having
- an electrode arrangement (30) with at least one anode (32) and with at least one cathode (34),
- wherein each of the anodes (32) has an anode contact portion (64) extending completely along one of its lengthwise edges (54),
wherein each of the cathodes (34) has a cathode contact portion (64) extending completely along one of its lengthwise edges (54),
- a casing (24) composed of a first casing part (26) and a second casing part (28) electrically insulated from the first casing part (26), in which the electrode arrangement (30) is accommodated,
- wherein each of the anodes (32) is electrically connected by means of its anode contact portion (64) to the first casing part (26) and each of the cathodes (34) is electrically connected by means of its cathode contact portion (70) to the second casing part (28).

2. Battery cell (14) according to Claim 1,
**characterized**
**in that** a conductor element (50) is arranged on an inner side (40) of the first casing part (26) facing the electrode arrangement (30), wherein each anode contact portion (64) is electrically connected to the conductor element (50).

3. Battery cell (14) according to Claim 1 or 2,
**characterized**
**in that**, for each of the anodes (32) and/or for each of the cathodes (34), the length of the lengthwise edge (54) is greater than the length of the widthwise edge (56), in particular is at least twice, preferably at least three times, the length of the widthwise edge (56).

4. Battery cell (14) according to Claim 2 or 3,
**characterized**
**in that** the conductor element (50) is provided with a nickel coating.

5. Battery cell (14) according to one of Claims 1 to 4,
**characterized**
**in that**, on the basis of the first casing part (26) and on the basis of the second casing part (28), in each case a bearing surface is formed for a second casing element (28) or for a first casing element (26) of a further battery cell (14).

6. Battery cell (14) according to one of Claims 1 to 5,
**characterized**
**in that** the first casing element (26) and/or the second casing element (28) is each provided on its inner side (40) with an insulator (42).

7. Battery cell (14) according to Claim 2 and according to Claim 6,
**characterized**
**in that** the insulator (42) has a recess (48) for the conductor element (50), wherein the conductor element (50) is accommodated in the recess (48) and peripherally joined fluid-tightly to the insulator (42).

8. Battery cell according to Claim 2 and according to Claim 6 or 7,
**characterized**
**in that**, for the fluid-tight joining of the conductor element (50) to the insulator (42), the conductor element (50) is peripherally joined to a pre-sealing strip (78),
- wherein the insulator (42) has a contour which corresponds to the contour of the conductor element (50) joined to the pre-sealing strip, and/or
- wherein the thickness of the insulator (42) is equal to the thickness of the conductor element (50) joined to the pre-sealing strip.

9. Battery cell (14) according to one of Claims 2 to 8,
**characterized**
**in that** the conductor element (50) has projections (80) or depressions on its side facing the electrode arrangement (30).

10. Battery cell (14) according to one of Claims 1 to 9,
**characterized**
**in that** the first casing part (26) and the second casing part (28) are formed from the same material, in particular from aluminium or from a stainless steel.

11. Battery cell (14) according to one of Claims 1 to 10,
**characterized**
**in that** each of the anode contact portions (64) is bent about a longitudinal direction (L) parallel to its lengthwise edge (54) to an upper side (72) of the electrode arrangement (30) which is facing the first casing part (26), and in that each of the cathode contact portions (70) is bent about a longitudinal direction (L) parallel to its lengthwise edge (54) to an underside (74) of the electrode arrangement (30) which is facing the second casing part (26).

12. Battery cell (14) according to one of Claims 1 to 10,
**characterized**
**in that** each of the anode contact portions (64) is electrically connected to an end side (38) of the first casing part (26) and each of the cathode contact portions (70) is electrically connected to an end side (38) of the second casing part (28).

13. Battery cell (14) according to one of Claims 1 to 12,
**characterized**
**in that**, in the region of the contact point of the anode contact portions (64) with the first casing part (26) or with the conductor element (50) and/or in the region of the contact point of the cathode contact portions (70) with the second casing part (28) or with a further conductor element (52), an insulator element (76) is respectively arranged on the electrode arrangement (30).

14. Battery cell (14) according to one of Claims 1 to 13,
**characterized**
- **in that**, for each of the anodes (32), an insulating portion (66) provided with an electrically insulating material is arranged between its anode contact portion (64) and its portion (60) provided with active material (62), and/or
- **in that**, for each of the cathodes (34), an insulating portion (66) provided with an electrically insulating material is arranged between its cathode contact portion (70) and a portion (60) provided with active material (62).

15. Battery cell (14) according to Claim 2,
**characterized**
**in that** the anode contact portions (64) are joined in a force-fitting manner to the conductor element (50) or to the first casing part (26), and/or in that the cathode contact portions (70) are joined in a force-fitting manner to a further conductor element (52) or to the second casing part (26).

16. Battery cell (14) according to one of the preceding claims,
**characterized**
**in that** the thickness (d_{I}) of the insulator (42) is equal to the sum of the thickness (d_{An}) of the anode contact portions (64), the thickness (d_{L}) of the conductor element (50) and the thickness (d_{E}) of the insulator element (76).

17. Battery module (6) for a traction battery (4), with a number of battery cells (14) according to one of Claims 1 to 16,
wherein the battery cells (14) are arranged next to one another with respect to a stacking direction (S), and wherein the first casing part (26) of one of the battery cells (14) is electrically connected to the second casing part (28) of the next battery cell (14) in the cell stacking direction (S_{BZ}).

18. Battery module (6) according to Claim 17,
**characterized**
**in that** an electrically conductive cooling plate (16) is arranged between two of the battery cells (14).

19. Electrically powered motor vehicle (2) with a traction battery (4), wherein the traction battery has at least one battery module (6) according to Claim 17 or 18 and/or at least one battery cell (14) according to one of Claims 1 to 16.

## Revendications

1. Elément de batterie (14), en particulier pour une batterie de traction (4) de véhicule à moteur (2), comportant
- un ensemble d'électrodes (30) avec au moins une anode (32) et avec au moins une cathode (34),
- chacune des anodes (32) comportant une section de contact d'anode (64) s'étendant totalement le long d'un de ses bords longitudinaux (54),
chacune des cathodes (34) comportant une section de contact de cathode (64) s'étendant totalement le long d'un de ses bords longitudinaux (54),
- une enveloppe (24) constituée d'une première partie d'enveloppe (26) et d'une seconde partie d'enveloppe (28) isolée électriquement par rapport à la première partie d'enveloppe (26), dans laquelle est logé l'ensemble d'électrodes (30),
- chacune des anodes (32) étant reliée électriquement à la première partie d'enveloppe (26) au moyen de sa section de contact d'anode (64) et chacune des cathodes (34) étant reliée à la seconde partie d'enveloppe (28) au moyen de sa section de contact de cathode (70).

2. Elément de batterie (14) selon la revendication 1, **caractérisé en ce**
**qu'**un élément conducteur (50) est disposé sur un côté intérieur (40), tourné vers l'ensemble d'électrodes (30), de la première partie d'enveloppe (26), chaque section de contact d'anode (64) étant reliée électriquement à l'élément conducteur (50).

3. Elément de batterie (14) selon la revendication 1 ou 2,
**caractérisé en ce**
**que** pour chacune des anodes (32) et/ou pour chacune des cathodes (34), la longueur du bord longitudinal (54) est supérieure à la longueur du bord de largeur (56), en particulier est égale au moins à deux fois, de préférence au moins à trois fois, la longueur du bord de largeur (56).

4. Elément de batterie (14) selon la revendication 2 ou 3,
**caractérisé en ce**
**que** l'élément conducteur (50) est pourvu d'un revêtement en nickel.

5. Elément de batterie (14) selon l'une des revendications 1 à 4,
**caractérisé en ce**
**qu'**est formée, à l'aide de la première partie d'enveloppe (26) et à l'aide de la seconde partie d'enveloppe (28), respectivement une surface d'appui pour un second élément d'enveloppe (28) ou pour un premier élément d'enveloppe (26) d'un autre élément de batterie (14).

6. Elément de batterie (14) selon l'une des revendications 1 à 5,
**caractérisé en ce**
**que** le premier élément d'enveloppe (26) et/ou le second élément d'enveloppe (28) sont pourvus chacun sur leur côté intérieur (40) d'un isolant (42).

7. Elément de batterie (14) selon la revendication 2 et selon la revendication 6,
**caractérisé en ce**
**que** l'isolant (42) comporte un évidement (48) pour l'élément conducteur (50), l'élément conducteur (50) étant logé dans l'évidement (48) et étant relié de manière étanche aux fluides à l'isolant (42) sur le côté de la périphérie.

8. Elément de batterie selon la revendication 2 et selon la revendication 6 ou 7,
**caractérisé en ce**
**que** l'élément conducteur (50) est assemblé côté périphérie à une bande de pré-scellage (78) pour l'assemblage étanche aux fluides de l'élément conducteur (50) à l'isolant (42),
- l'isolant (42) comportant un contour correspondant au contour de l'élément conducteur (50) assemblé à la bande de pré-scellage , et/ou
- l'épaisseur de l'isolant (42) étant égale à l'épaisseur de l'élément conducteur (50) assemblé à la bande de pré-scellage.

9. Elément de batterie (14) selon l'une des revendications 2 à 8,
**caractérisé en ce**
**que** l'élément conducteur (50) comporte des prolongements (80) ou des renfoncements faisant saillie vers le haut sur son côté tourné vers l'ensemble d'électrodes (30).

10. Elément de batterie (14) selon l'une des revendications 1 à 9,
**caractérisé en ce**
**que** la première partie d'enveloppe (26) et la seconde partie d'enveloppe (28) sont formées à partir du même matériau, en particulier à partir d'aluminium ou à partir d'un acier inoxydable.

11. Elément de batterie (14) selon l'une des revendications 1 à 10,
**caractérisé en ce**
**que** chacune des sections de contact d'anode (64) est recourbée vers un côté supérieur (72) de l'ensemble d'électrodes (30) autour d'une direction longitudinale (L) parallèle à son bord longitudinal (54), lequel est tourné vers la première partie d'enveloppe (26), et que chacune des sections de contact de cathode (70) est recourbée vers un côté inférieur (74) de l'ensemble d'électrodes (30) autour d'une direction longitudinale (L) parallèle à son bord longitudinal (54), lequel est tourné vers la seconde partie d'enveloppe (26).

12. Elément de batterie (14) selon l'une des revendications 1 à 10,
**caractérisé en ce**
**que** chacune des sections de contact d'anode (64) est reliée électriquement à un côté frontal (38) de la première partie d'enveloppe (26) et chacune des sections de contact de cathode (70) est reliée électriquement à un côté frontal (38) de la seconde partie d'enveloppe (28).

13. Elément de batterie (14) selon l'une des revendications 1 à 12,
**caractérisé en ce**
**que** respectivement un élément isolant (76) est disposé sur l'ensemble d'électrodes (30) dans la zone du point de contact des sections de contact d'anode (64) avec la première partie d'enveloppe (26) ou avec l'élément conducteur (50) et/ou dans la zone du point de contact des sections de contact de cathode (70) avec la seconde partie d'enveloppe (28) ou avec un autre élément conducteur (52).

14. Elément de batterie (14) selon l'une des revendications 1 à 13,
**caractérisé en ce**
- **qu'**une section d'isolation (66) pourvue d'un matériau électriquement isolant est disposée à proximité de chacune des anodes (32) entre sa section de contact d'anode (64) et sa section (60) pourvue de matériau actif (62), et/ou
- **qu'**une section d'isolation (66) pourvue d'un matériau électriquement isolant est disposée à proximité de chacune des cathodes (34) entre sa section de contact de cathode (70) et une section (60) pourvue de matériau actif (62).

15. Elément de batterie (14) selon la revendication 2, **caractérisé en ce**
**que** les sections de contact d'anode (64) sont assemblées à force à l'élément conducteur (50) ou à la première partie d'enveloppe (26), et/ou que les sections de contact de cathode (70) sont assemblées à force à un autre élément conducteur (52) ou à la seconde partie d'enveloppe (26).

16. Elément de batterie (14) selon l'une des revendications précédentes,
**caractérisé en ce**
**que** l'épaisseur (d_{I}) de l'isolant (42) est égale à la somme de l'épaisseur (d_{An}) des sections de contact d'anode (64), de l'épaisseur (d_{L}) de l'élément conducteur (50) et de l'épaisseur (d_{E}) de l'élément isolant (76).

17. Module de batterie (6) d'une batterie de traction (4) avec un nombre d'éléments de batterie (14) selon l'une des revendications 1 à 16,
les éléments de batterie (14) étant disposés côte à côte par rapport à une direction d'empilement (S), et la première partie d'enveloppe (26) de l'un des éléments de batterie (14) étant reliée électriquement à la seconde partie d'enveloppe (28) de l'élément de batterie (14) qui suit dans la direction d'empilement (S_{BZ}) des éléments.

18. Module de batterie (6) selon la revendication 17, **caractérisé en ce**
**qu'**une plaque de refroidissement (16) électriquement conductrice est disposée entre deux des éléments de batterie (14).

19. Véhicule à moteur (2) à entraînement électrique avec une batterie de traction (4), la batterie de traction comportant au moins un module de batterie (6) selon la revendication 17 ou 18 et/ou au moins un élément de batterie (14) selon l'une des revendications 1 à 16.
